# EUROPEAN PATENT SPECIFICATION

(11) **EP 2 827 251 B1**
(45) Date of publication and mention of the grant of the patent: **12.02.2020**
(21) Application number: 13761770.0
(22) Date of filing: 08.03.2013
(51) Int. Cl.: G06F 11/07

(54) **OPERATION ADMINISTRATION DEVICE, OPERATION ADMINISTRATION METHOD, AND PROGRAM**
BETRIEBSVERWALTUNGSVORRICHTUNG, BETRIEBSVERWALTUNGSVERFAHREN UND PROGRAMM
DISPOSITIF DE GESTION D'EXPLOITATION, PROCÉDÉ DE GESTION D'EXPLOITATION ET PROGRAMME

(30) Priority: 14.03.2012 JP 2012057337
(43) Date of publication of application: 21.01.2015
(73) Proprietor: NEC Corporation, Tokyo 108-8001 (JP)
(72) Inventor: KATO, Kiyoshi, Tokyo 1088001 (JP)
(74) Representative: Vossius & Partner Patentanwälte Rechtsanwälte mbB
(86) International application number: PCT/JP2013/001480
(87) International publication number: WO 2013/136739

(56) References cited:
- WO-A1-2011/125138
- WO-A2-03/009140
- US-A1- 2008 034 363
- US-A1- 2009 217 099
- US-A1- 2011 197 094

## Description

### [Technical Field]

The present invention relates to an operation management apparatus, an operation management method and a program and in particular, relates to an operation management apparatus, an operation management method and a program which detect abnormality of a system.

### [Background Art]

An example of an operation management system which models a system using time series information of system performance and detects a fault of the system using the generated model is described in PTL 1.

The operation management system described in PTL 1 generates a correlation model which indicates a correlation among metrics by deciding a correlation function for each of combinations among the plurality of metrics based on measured values of the plurality of metrics (performance index) of the system. And this operation management system detects destruction of the correlation (correlation destruction) for the measured values of the metrics inputted newly using the generated correlation model and identifies a cause of the fault based on the correlation destruction. A technology which analyzes the fault cause based on the correlation destruction as above is called an invariant relational analysis.

In the invariant relational analysis, since attention is paid not to the metric values but to a correlation among the metrics, compared with a case when a fault is detected by comparing the respective metric values with a threshold value, there are advantages such that setting of the threshold value is unnecessary, detection of a fault which cannot be detected by the threshold value is possible, and identification of an abnormality cause is easy.

Note that, as related technologies in the invariant relational analysis, operation management systems which identify a fault cause of detected correlation destruction based on distribution of an abnormality degree (degree of correlation destruction) at time of the fault in the past and whether the correlation destruction for each correlation is detected or not are disclosed in PTL 2 and PTL 3.

PTL 1: JP-2009-199533 A
PTL 2: WO 2010/032701 A1
PTL 3: WO 2011/155621 A1

WO 03/009140 A2 relates to a system and a corresponding method for adaptive threshold determination for performance metrics and analyzing a correlation for metrics on which an alarm is detected.

US 2011/0197094 A1 relates to systems and corresponding methods for visual correlation of log events, configuration changes and conditions producing alerts in a virtual infrastructure.

US 2009/0217099 A1 relates to an operations management apparatus which acquires performance information for each of a plurality of performance items from a plurality of controlled units.

### [Summary of Invention]

### [Technical Problem]

In the invariant relational analysis disclosed in PTL 1 mentioned above, the correlation model generated based on the measured values of metrics in a certain period in which the system of analysis target is operating in normal status is used. For this reason, when a system configuration is changed, by detecting the correlation destruction incorrectly, there is a possibility that the correlation is judged as an abnormal correlation.

For example, when the analysis target system is a web system which provides 24 hour service, a redundant configuration such as a back-up server, a back-up hard disk and a redundant network is used in order to continue the service even if there is a failure in part of the system. In this case, for example, when switching occurs in the redundant configuration, since a behavior of the system is changed, the correlation between the metrics before the switching and the correlation after the switching are partially different.

In status that the correlation is changed by a system configuration change, when the analysis is performed using the correlation model before the system configuration change, even if the service is operating normally, abnormality is detected for the metric concerning the changed correlation. In this case, an administrator needs to grasp the changed correlation to exclude the abnormality related to the metrics. Therefore, knowledge and work required for the administrator increase.

An object of the present invention is to solve the problem mentioned above and to provide an operation management apparatus, an operation management method and a program which can carry out a fault analysis in the invariant relational analysis using an appropriate correlation model even if a system configuration has been changed.

### [Solution to Problem]

The solution is provided by the appended independent claims.

### [Advantageous Effect of Invention]

An advantageous effect of the present invention is to be able to carry out a fault analysis in the invariant relational analysis using an appropriate correlation model even if a system configuration has been changed.

### [Brief Description of Drawings]

Fig. 1 is a block diagram showing a characteristic configuration of a first exemplary embodiment of the present invention.
Fig. 2 is a block diagram showing a configuration of an operation management system 1 in the first exemplary embodiment of the present invention.
Fig. 3 is a flow chart showing processing of an operation management apparatus 100 in the first exemplary embodiment of the present invention.
Fig. 4 is a diagram showing an example of a configuration change detection rule 125 in the first exemplary embodiment of the present invention.
Fig. 5 is a diagram showing an example of a correlation destruction pattern update rule 126 in the first exemplary embodiment of the present invention.
Fig. 6 is a diagram showing an example of sequential performance information 121 in the first exemplary embodiment of the present invention.
Fig. 7 is a block diagram showing an example of a configuration of an analysis target system 200 in the first exemplary embodiment of the present invention.
Fig. 8 is a diagram showing an example of configuration information 127 in the first exemplary embodiment of the present invention.
Fig. 9 is a diagram showing an example of a correlation model 122 in the first exemplary embodiment of the present invention.
Fig. 10 is a diagram showing an example of a correlation map 128 in the first exemplary embodiment of the present invention.
Fig. 11 is a diagram showing an example of correlation destruction information 123 in the first exemplary embodiment of the present invention.
Fig. 12 is a diagram showing an example of a correlation destruction pattern 124 in the first exemplary embodiment of the present invention.
Fig. 13 is a diagram showing a relation among a system configuration change, the correlation model 122 and the correlation destruction pattern 124 in the first exemplary embodiment of the present invention.
Fig. 14 is a diagram showing an example of a configuration change detection screen 300 in the first exemplary embodiment of the present invention.
Fig. 15 is a diagram showing an example of an analysis results output screen 310 in the first exemplary embodiment of the present invention.
Fig. 16 is a block diagram showing a configuration of the operation management system 1 in a second exemplary embodiment of the present invention.
Fig. 17 is a flow chart showing processing of the operation management apparatus 100 in the second exemplary embodiment of the present invention.
Fig. 18 is a diagram showing an example of a configuration change detection rule 125 in the second exemplary embodiment of the present invention.
Fig. 19 is a diagram showing an example of a correlation destruction pattern update rule 126 in the second exemplary embodiment of the present invention.
Fig. 20 is a block diagram showing an example of a configuration of the analysis target system 200 in the second exemplary embodiment of the present invention.
Fig. 21 is a diagram showing an example of a correlation model 122 in the second exemplary embodiment of the present invention.
Fig. 22 is a diagram showing an example of a correlation map 128 in the second exemplary embodiment of the present invention.
Fig. 23 is a diagram showing an example of a correlation destruction pattern 124 in the second exemplary embodiment of the present invention.
Fig. 24 is a block diagram showing another example of a configuration of the analysis target system 200 in the second exemplary embodiment of the present invention.
Fig. 25 is a diagram showing another example of a correlation model 122 in the second exemplary embodiment of the present invention.
Fig. 26 is a diagram showing another example of a correlation map 128 in the second exemplary embodiment of the present invention.
Fig. 27 is a diagram showing another example of a correlation destruction pattern 124 in the second exemplary embodiment of the present invention.
Fig. 28 is a block diagram showing another example of a configuration of the analysis target system 200 in the second exemplary embodiment of the present invention.
Fig. 29 is a diagram showing another example of a correlation model 122 in the second exemplary embodiment of the present invention.
Fig. 30 is a diagram showing another example of a correlation map 128 in the second exemplary embodiment of the present invention.
Fig. 31 is a diagram showing another example of a correlation destruction pattern 124 in the second exemplary embodiment of the present invention.
Fig. 32 is a diagram showing a relation among a system configuration change, the correlation model 122 and the correlation destruction pattern 124 in the second exemplary embodiment of the present invention.
Fig. 33 is a diagram showing another example of a correlation model 122 in the second exemplary embodiment of the present invention.
Fig. 34 is a diagram showing an example of a configuration change detection screen 300 in the second exemplary embodiment of the present invention.

### [Description of Embodiments]

### (First exemplary embodiment)

Next, a first exemplary embodiment of the present invention will be explained.

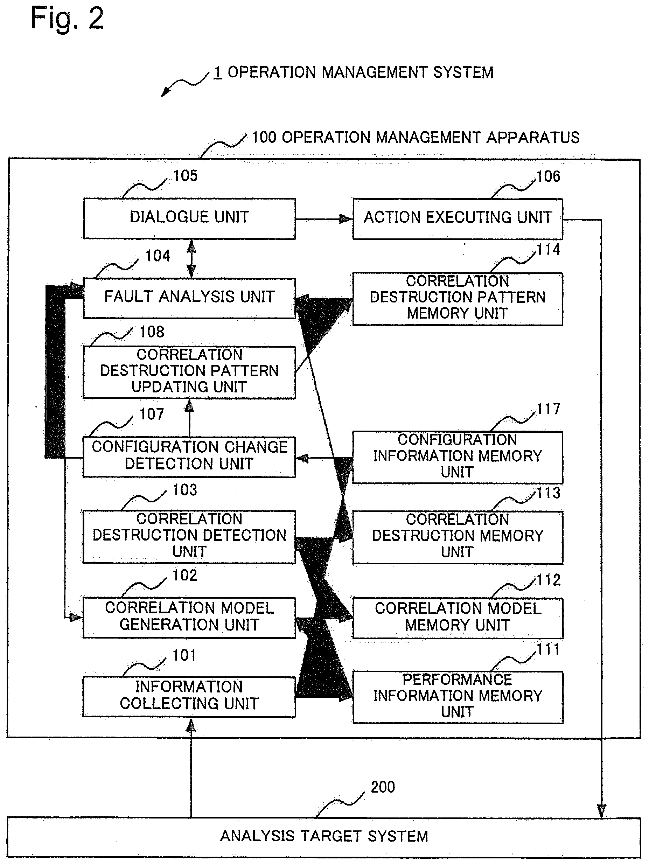

First, a configuration of the first exemplary embodiment of the present invention will be explained. Fig. 2 is a block diagram showing a configuration of an operation management system 1 in the first exemplary embodiment of the present invention.

Referring to Fig. 2, the operation management system 1 in the first exemplary embodiment of the present invention includes an operation management apparatus 100 and an analysis target system 200. The operation management apparatus 100 and the analysis target system 200 are connected via a network, or the like.

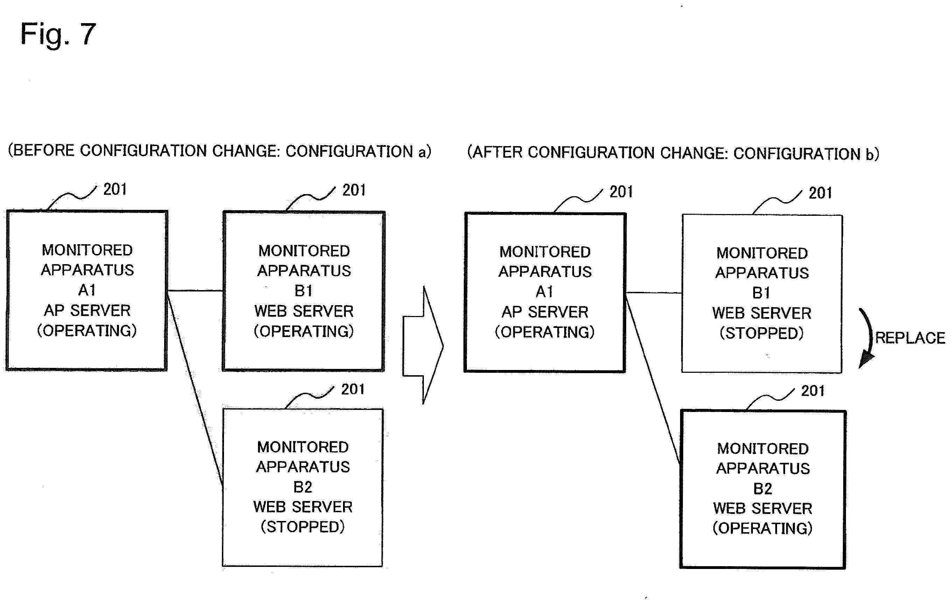

Fig. 7 is a block diagram showing an example of a configuration of the analysis target system 200 in the first exemplary embodiment of the present invention. Here, the analysis target system 200 includes one or more monitored apparatuses 201. The monitored apparatus 201 is, for example, a computer which executes service processing of a server such as a Web server, an application server (AP server) and a database server (DB server). Note that, in the following explanation, text in parentheses following a reference sign indicates an identifier. For example, a monitored apparatus 201 (A1) indicates the monitored apparatus 201 with an identifier A1. In the example of Fig. 7, the analysis target system 200 includes the monitored apparatuses 201 (A1, B1 and B2).

The monitored apparatus 201 measures performance values (measured values) of a plurality of items of the monitored apparatus 201 for each fixed interval (a predetermined performance information collecting period) and sends them to the operation management apparatus 100. As the items of the performance value, a use rate or a use amount of a computer resource such as, for example, a CPU (Central Processing Unit) use rate (CPU), a memory use rate (MEM), a disk access frequency (DSK), and a network use rate (NW) are used.

Here, a set of the monitored apparatus 201 and the item of the performance value is defined as a metric (performance index). Also, a set of a plurality of metric values measured at the identical time is defined as performance information. The metric is represented by a numerical value such as an integer or a decimal. Also, the metric corresponds to the element in PTL 1.

The operation management apparatus 100 generates a correlation model 122 of the analysis target system 200 based on performance information collected from the monitored apparatus 201 which is a monitoring target, and detects a fault or abnormality of the monitored apparatus 201 using the generated correlation model 122.

The operation management apparatus 100 includes an information collecting unit 101, a correlation model generation unit 102, a correlation destruction detection unit 103, a fault analysis unit 104, a dialogue unit 105, an action executing unit 106, a configuration change detection unit 107, a correlation destruction pattern updating unit 108, a performance information memory unit 111, a correlation model memory unit 112, a correlation destruction memory unit 113, a correlation destruction pattern memory unit 114 and a configuration information memory unit 117.

The information collecting unit 101 collects the performance information from the monitored apparatus 201 with the predetermined performance information collecting period and stores time series variation of the performance information in the performance information memory unit 111 as sequential performance information 121.

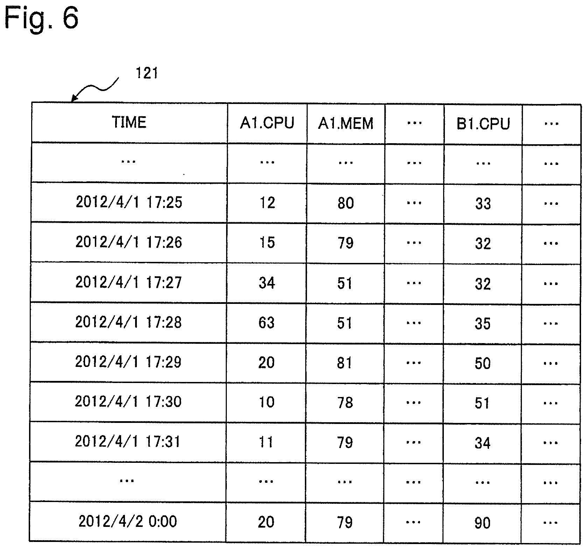

Fig. 6 is a diagram showing an example of the sequential performance information 121 in the first exemplary embodiment of the present invention. In the example of Fig. 6, the sequential performance information 121 includes a CPU use rate (A1.CPU) and a memory use amount (A1.MEM) of the monitored apparatus 201 (A1), a CPU use rate (B1.CPU) of the monitored apparatus 201 (B1), or the like, as the performance items.

Also, the information collecting unit 101 collects an attribute of the monitored apparatus 201 (an apparatus attribute) with a predetermined apparatus attribute collecting period and stores it in the configuration information memory unit 117 as configuration information 127.

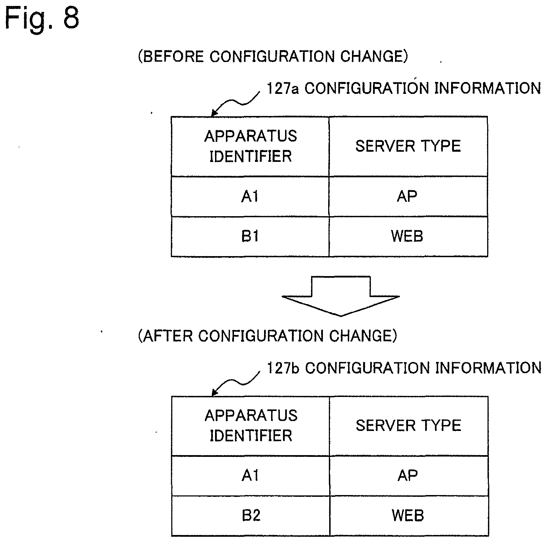

Fig. 8 is a diagram showing an example of the configuration information 127 in the first exemplary embodiment of the present invention. In the example of Fig. 8, the configuration information 127 includes an identifier of the monitored apparatus 201 and a type of service processing (server type) of the monitored apparatus 201, as the apparatus attribute of the monitored apparatus 201.

The information collecting unit 101 collects the apparatus attribute, for example, by referring to an MIB (Management information base) of the monitored apparatus 201 using SNMP (Simple Network Management Protocol). Also, the information collecting unit 101 may collect the apparatus attribute together with the performance information from the monitored apparatus 201.

The correlation model generation unit 102 generates a correlation model 122 of the analysis target system 200 based on the sequential performance information 121.

Here, the correlation model 122 includes a correlation function (or transform function) which indicates a correlation between the metrics for each metric pair among a plurality of metrics. The correlation function is a function which estimates time series of values of other metric from time series of values of one metric in the metric pair. The correlation model generation unit 102 decides coefficients of the correlation function for each metric pair based on the sequential performance information 121 in a predetermined modeling period. The coefficients of the correlation function are decided by system identification processing to the time series of the measured values of the metrics, as well as the operation management apparatus in PTL 1.

Note that the correlation model generation unit 102 may, as well as the operation management apparatus in PTL 1, calculate a weight of the correlation function for each metric pair and use a set of the correlation functions whose weight is equal to or greater than a predetermined value (effective correlation functions) as the correlation model 122.

The correlation model memory unit 112 memorizes the correlation model 122 generated by the correlation model generation unit 102.

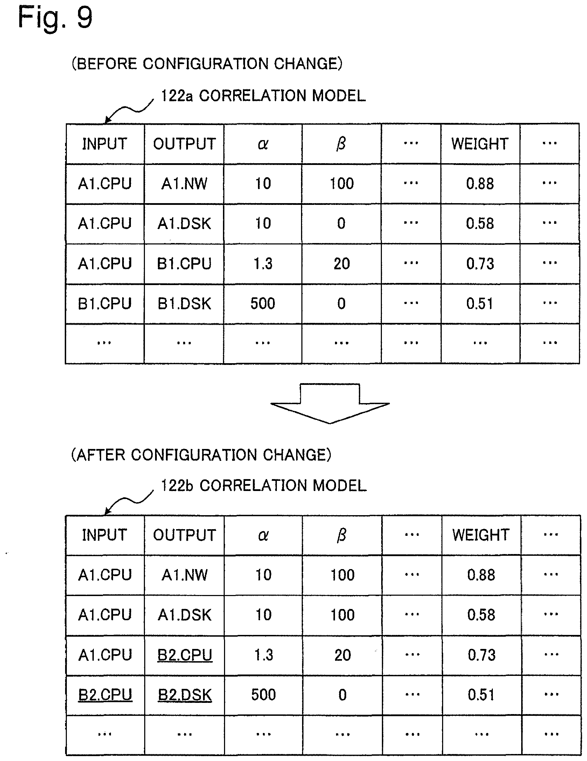

Fig. 9 is a diagram showing an example of the correlation model 122 in the first exemplary embodiment of the present invention. In the example of Fig. 9, the correlation model 122 includes coefficients (α, β) and a weight of the correlation function for a pair of an input metric (X) and an output metric (Y). Here, it is assumed that the correlation function is Y = αX+β. Note that, as far as time series of values of other metric can be estimated from time series of values of one metric in the metric pair, other functional expression may be used as the correlation function. For example, Y = aX1+bX2+cX3+dY1+eY2+f, which is a functional expression using X1, X2 and X3 as time series of values of X in the past and Y1 and Y2 as time series values of Y in the past, may be used.

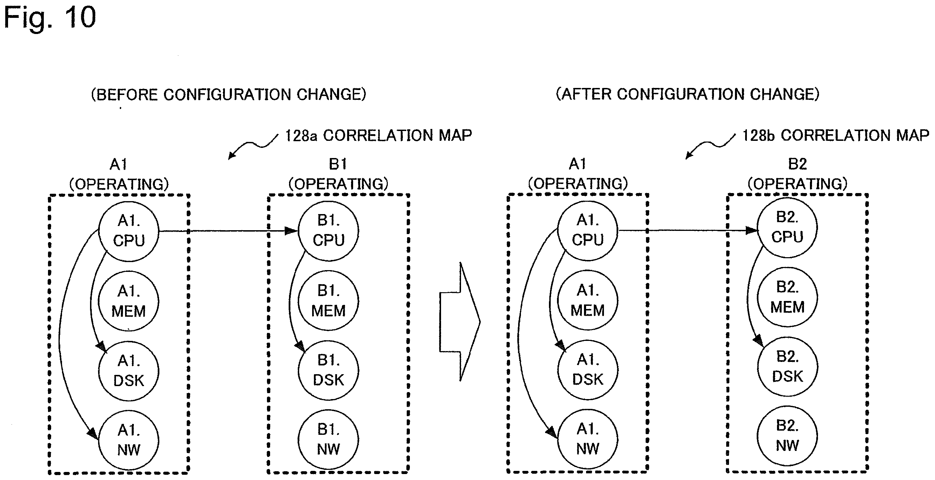

Fig. 10 is a diagram showing an example of a correlation map 128 in the first exemplary embodiment of the present invention. The correlation map 128 of Fig. 10 corresponds to the correlation model 122 of Fig. 9. In the correlation map 128, the correlation model 122 is indicated by a graph including nodes and arrows. Here, each node indicates a metric, and the arrow between the metrics indicates a correlation from one to the other among the two metrics.

The correlation destruction detection unit 103 detects, as well as the operation management apparatus in PTL 1, correlation destruction of the correlation included in the correlation model 122 concerning the performance information inputted newly.

Here, as well as PTL 1, the correlation destruction detection unit 103 obtains, through inputting a measurement value of one metric out of two metrics of the plural metrics into the correlation function corresponding to the two metrics, an estimated value of the other metric. When a difference between the estimated value and a measured value of the other metric (a conversion error caused by the correlation function) is equal to or greater than a predetermined value, the correlation destruction detection unit 103 detects it as correlation destruction of the correlation between the two metrics. Also, the correlation destruction detection unit 103 calculates an abnormality degree which indicates a degree of the correlation destruction based on status of the detected correlation destruction. Here, the abnormality degree is calculated, for example, in the correlation model 122, based on a number of the correlations on which the correlation destruction is detected, a ratio of a number of the correlations on which the correlation destruction is detected to a number of the correlations, a size of the correlation destruction, or the like.

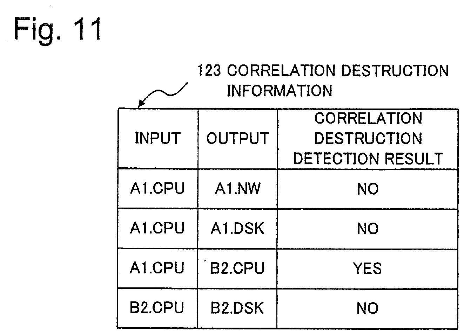

The correlation destruction memory unit 113 memorizes correlation destruction information 123 which indicates the correlation on which correlation destruction is detected. Fig. 11 is a diagram showing an example of the correlation destruction information 123 in the first exemplary embodiment of the present invention. The correlation destruction information 123 of Fig. 11 corresponds to a correlation model 122b of Fig. 9. In the example of Fig. 11, the correlation destruction information 123 indicates whether correlation destruction is detected or not for each correlation of the correlation model 122.

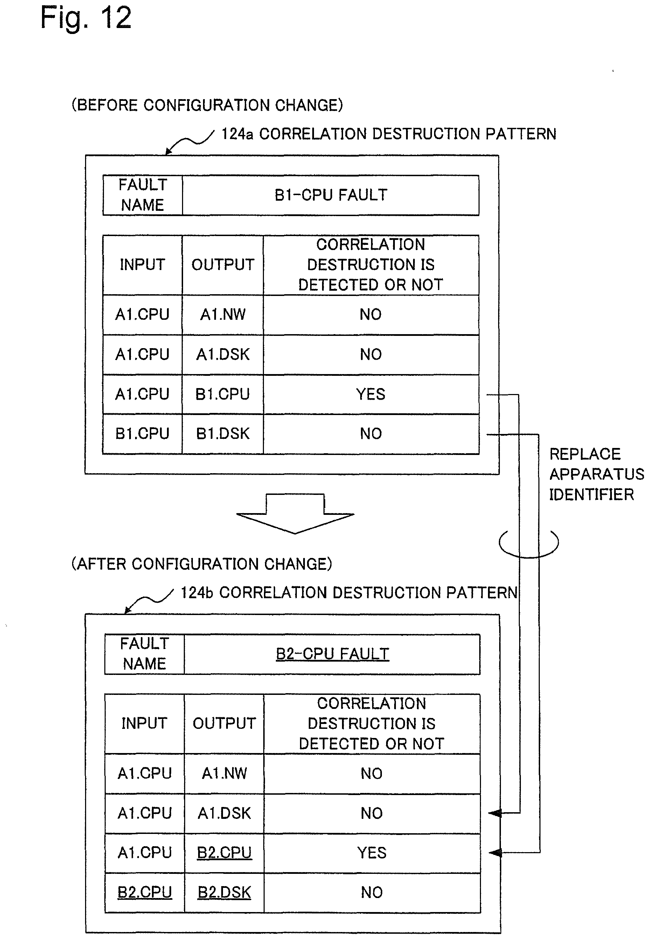

The correlation destruction pattern memory unit 114 memorizes correlation destruction pattern 124 which indicates status of correlation destruction at time of a fault in the past. Fig. 12 is a diagram showing an example of the correlation destruction pattern 124 in the first exemplary embodiment of the present invention. The correlation destruction pattern 124 of Fig. 12 corresponds to the correlation model 122 of Fig. 9. In the example of Fig. 12, the correlation destruction pattern 124 indicates, as well as the correlation destruction set information in PTL 3, a fault name and whether the correlation destruction was detected or not when the fault occurred for each correlation of the correlation model 122.

Note that, as far as the status of the correlation destruction at time of the fault in the past is indicated, other information may be used as the correlation destruction pattern 124. For example, as well as PTL 2, distribution of the abnormality degree for each metric (degree of correlation destruction) may be used, as the correlation destruction pattern 124.

The fault analysis unit 104 compares, as well as PTL 2 or PTL 3, the status of the correlation destruction detected for new performance information and the correlation destruction pattern 124, and identifies a fault of the similar correlation destruction pattern 124 as an estimated cause.

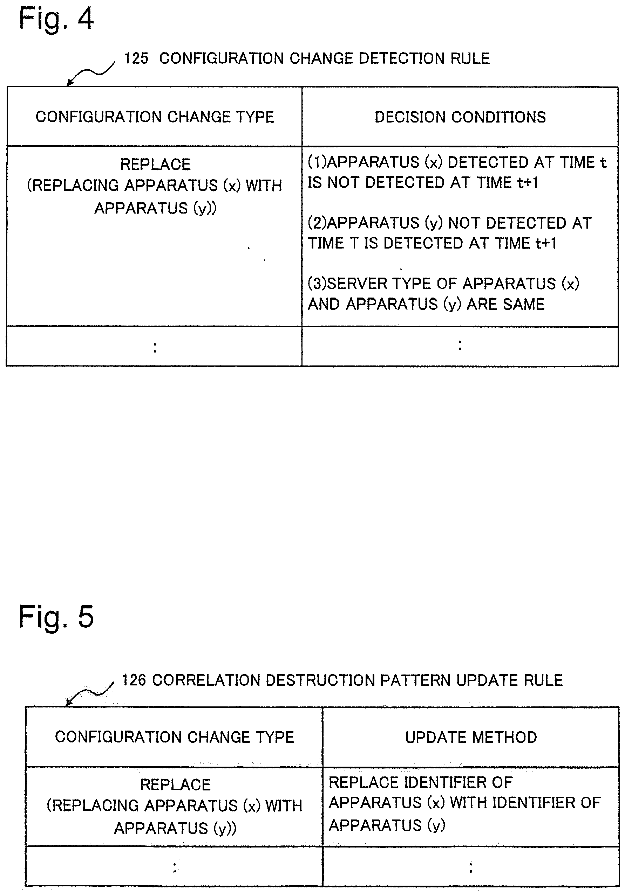

The configuration change detection unit 107 detects a configuration change in the analysis target system 200 using the configuration information 127. The configuration change detection unit 107 identifies a type of the configuration change based on a configuration change detection rule 125. Fig. 4 is a diagram showing an example of the configuration change detection rule 125 in the first exemplary embodiment of the present invention. In the example of Fig. 4, the configuration change detection rule 125 includes, for each type of the configuration change, decision conditions for deciding whether the configuration change corresponds to the type has occurred. As the decision condition, conditions concerning changing or identity of the apparatus attribute between the current configuration information 127 and the previous configuration information 127 are set.

The correlation destruction pattern updating unit 108 updates the correlation destruction pattern 124 according to a correlation destruction pattern update rule 126. Fig. 5 is a diagram showing an example of the correlation destruction pattern update rule 126 in the first exemplary embodiment of the present invention. In the example of Fig. 5, the correlation destruction pattern update rule 126 includes an update method of the correlation destruction pattern 124 for each type of the configuration change. As the update method, a method to correct the correlation destruction pattern 124 in such a way as to adapt to a correlation model 122 used after the configuration change is set.

The dialogue unit 105 outputs, to an administrator or the like, that the configuration change is detected. And the dialogue unit 105 receives a direction to switch a correlation model 122 used by the correlation destruction detection unit 103 to detect the correlation destruction (correlation model 122 for analysis), from the administrator, or the like. Also, the dialogue unit 105 outputs a fault analysis result to the administrator, or the like, and receives a direction to perform an action for the fault, from the administrator, or the like.

The action executing unit 106 executes the action directed by the administrator, or the like, on the analysis target system 200.

Note that the operation management apparatus 100 may be a computer which includes a CPU and a storage medium memorizing a program and which operates in accordance with a control based on the program. Moreover, the performance information memory unit 111, the correlation model memory unit 112, the correlation destruction memory unit 113 and the correlation destruction pattern memory unit 114 may be configured by an individual storage medium, respectively, or by one storage medium.

Next, operation of the operation management apparatus 100 in the first exemplary embodiment of the present invention will be explained.

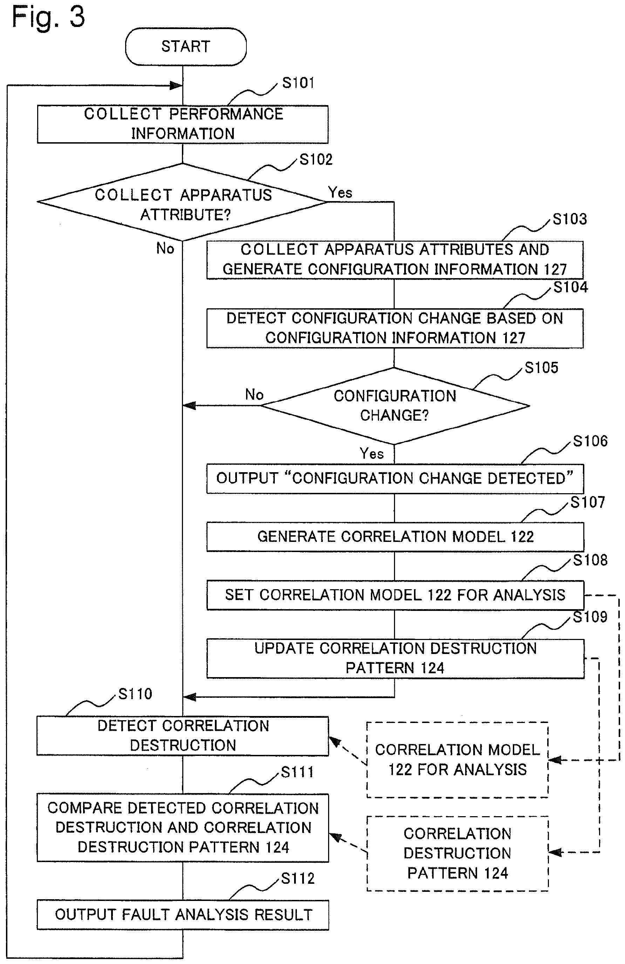

Fig. 3 is a flow chart showing processing of the operation management apparatus 100 in the first exemplary embodiment of the present invention.

First, the information collecting unit 101 of the operation management apparatus 100 collects performance information from the monitored apparatuses 201 on the analysis target system 200 (Step S101). The information collecting unit 101 stores the collected performance information in the performance information memory unit 111 as the sequential performance information 121.

When an apparatus attribute is collected at timing of the predetermined apparatus attribute collecting period (Step S102/Yes), the information collecting unit 101 collects apparatus attributes from the monitored apparatuses 201 and generates configuration information 127 (Step S103). The information collecting unit 101 stores the generated configuration information 127 in the configuration information memory unit 117.

The configuration change detection unit 107 detects a configuration change based on the configuration information 127 (Step S104). Here, the configuration change detection unit 107 detects the configuration change according to the configuration change detection rule 125.

When the configuration change is not detected in Step S104 (Step S105/No), processing from Step S 110 is carried out.

On the other hand, when the configuration change is detected in Step S104 (Step S105/Yes), the fault analysis unit 104 outputs "configuration change detected" to the administrator, or the like, via the dialogue unit 105 (Step S106).

Next, when the dialogue unit 105 receives a direction to switch a model from the administrator, or the like, the fault analysis unit 104 directs generation of a correlation model 122 to the correlation model generation unit 102. The correlation model generation unit 102 refers to the sequential performance information 121 of the performance information memory unit 111 and generates a correlation model 122 (Step S107). Here, the correlation model generation unit 102 generates the correlation model 122 based on the performance information in a predetermined modeling period collected after the configuration change detection. The correlation model generation unit 102 stores the generated correlation model 122 in the correlation model memory unit 112.

Note that the fault analysis unit 104 may output "configuration change detected" in Step S106 when generation of the correlation model 122 becomes possible after the performance information in the predetermined modeling period has been collected. Also, the fault analysis unit 104 may execute processing from Step S107 without waiting for the direction in Step S106 from the administrator, or the like.

The fault analysis unit 104 sets the generated correlation model 122 as the correlation model 122 for analysis (Step S108).

The correlation destruction pattern updating unit 108 updates the correlation destruction pattern 124 (Step S109). Here, the correlation destruction pattern updating unit 108 updates the correlation destruction pattern 124 according to the correlation destruction pattern update rule 126.

The correlation destruction detection unit 103 detects correlation destruction of the correlation included in the correlation model 122 for analysis using the sequential performance information 121 and generates correlation destruction information 123 (Step S110). The correlation destruction detection unit 103 stores the correlation destruction information 123 in the correlation destruction memory unit 113.

The fault analysis unit 104 compares the status of the correlation destruction which is included in the generated correlation destruction information 123 and the correlation destruction pattern 124, and identifies an estimated cause of a fault (Step S111).

Finally, the fault analysis unit 104 outputs a fault analysis result via the dialogue unit 105 (Step S112). And the action executing unit 106 executes an action for the fault which is received from the administrator, or the like, via the dialogue unit 105, on the analysis target system 200.

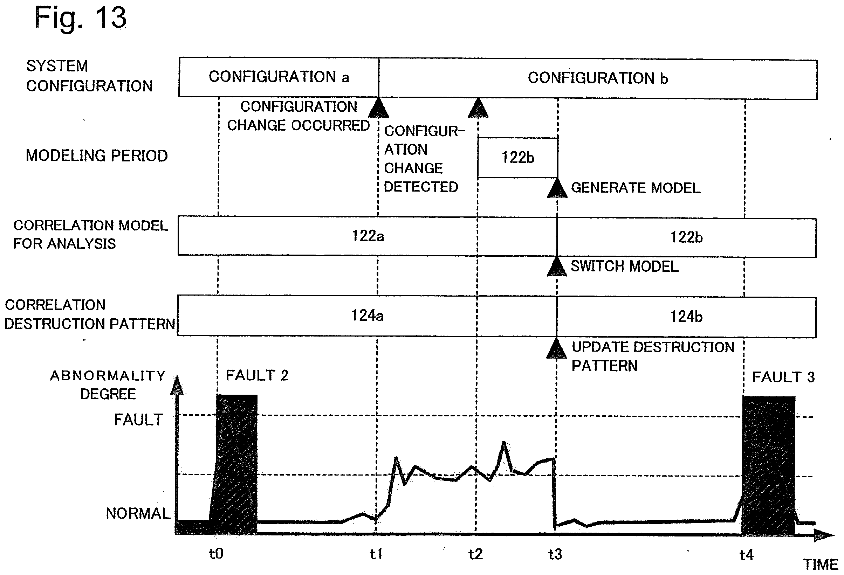

Next, a specific example of operation will be explained. Fig. 13 is a diagram showing a relation among a system configuration chnage, the correlation model 122 and the correlation destruction pattern 124, in the first exemplary embodiment of the present invention

Here, the operation will be explained taking the case, as an example, when the configuration of the analysis target system 200 before change is that an operational state of the monitored apparatus 201 (B1) is "operating" and the operational state of the monitored apparatus 201 (B2) is "stopped", with respect to the monitored apparatuses 201 (B1 and B2) of the redundant configuration, as shown in Fig. 7 (before configuration change). Here, it is assumed that server types of the monitored apparatuses 201 (B1 and B2) are the same, and configurations of the monitored apparatuses 201 (B1 and B2), such as program modules executed to realize the service processing, are also the same.

Also, it is assumed that a correlation model 122a of Fig. 9 (correlation map 128a of Fig. 10) is generated and set as the correlation model 122 for analysis. Further, it is assumed that a correlation destruction pattern 124a of Fig. 12 is generated and set as the correlation destruction pattern 124 for a fault (fault 2) of the monitored apparatus 201 (B1) (Web server) which occurred at time t0 of Fig. 13.

At time t1 of Fig. 13, it is assumed that, by switching of the redundant configuration, the operational state of the monitored apparatus 201 (B1) has changed to "stopped" and the operational state of the monitored apparatus 201 (B2) has changed to "operating", as indicated in Fig. 7 (after configuration change).

At time t2 of Fig. 13, the information collecting unit 101 generates configuration information 127b of Fig. 8. The configuration change detection unit 107 compares the configuration information 127b with configuration information 127a of Fig. 8 which is the previous configuration information 127. Here, regarding the server type "web", since a detection state of the monitored apparatus 201 (B1) is changed from "not detected" to "detected" and the detection state of the monitored apparatus 201 (B2) is changed from "detected" to "not detected", the configuration change detection unit 107 decides that the configuration change of the configuration change type "replace (replacing the monitored apparatus 201 (B1) with the monitored apparatus 201 (B2))" has occurred, according to the configuration change detection rule 125 of Fig. 4.

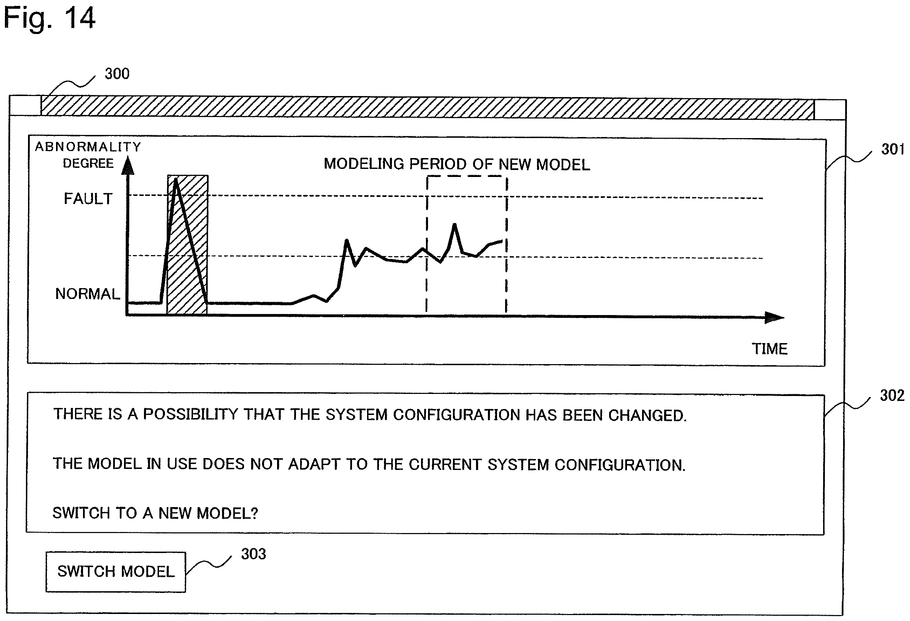

Fig. 14 is a diagram showing an example of a configuration change detection screen 300 in the first exemplary embodiment of the present invention. At time t3 of Fig. 13, the dialogue unit 105 outputs "configuration change detected" on the configuration change detection screen 300, as shown in Fig. 14, for example. In the example of Fig. 14, the configuration change detection screen 300 includes an abnormality degree graph 301 indicating time series variation of the abnormality degree, configuration change detection information 302 which indicates that the configuration change is detected, and a button 303 which receives a direction to switch a model. Note that the configuration change detection screen 300 may include information about metrics with respect to detected correlation destruction. Also, the configuration change detection screen 300 may include, for example, information about metrics affected by the configuration change, such as metrics of the monitored apparatus 201 of which the detected state is changed to "detected" or "not detected" by the configuration change.

As a result, the administrator, or the like can grasp the configuration change of the analysis target system 200 and can direct switching to the appropriate correlation model 122.

Next, when the dialogue unit 105 receives the direction to switch the model from the administrator, or the like with the button 303, the correlation model generation unit 102 generates a correlation model 122b of Fig. 9 (correlation map 128b of Fig. 10). And the fault analysis unit 104 sets the correlation model 122b of Fig. 9 as the correlation model 122 for analysis.

The correlation destruction pattern updating unit 108 generates a correlation destruction pattern 124b of Fig. 12 by replacing an identifier of the monitored apparatus 201 (A1) in the correlation destruction pattern 124a with an identifier of the monitored apparatus 201 (B1), according to the update method corresponding to the configuration change type "replace" in the correlation destruction pattern update rule 126 of Fig. 5.

Hereafter, the fault analysis is carried out using the correlation model 122b of Fig. 9 and the correlation destruction pattern 124b of Fig. 12.

At time t4 of Fig. 13, it is assumed that a fault (fault 3) of the monitored apparatus 201 (B2) (Web server) occurred.

In this case, the correlation destruction detection unit 103 generates, for example, correlation destruction information 123 as shown in Fig. 11. The fault analysis unit 104 compares the correlation destruction information 123 of Fig. 11 and the correlation destruction pattern 124b of Fig. 12 and identifies the fault of the correlation destruction pattern 124b "CPU fault of the monitored apparatus 201 (B2)" as an estimated cause.

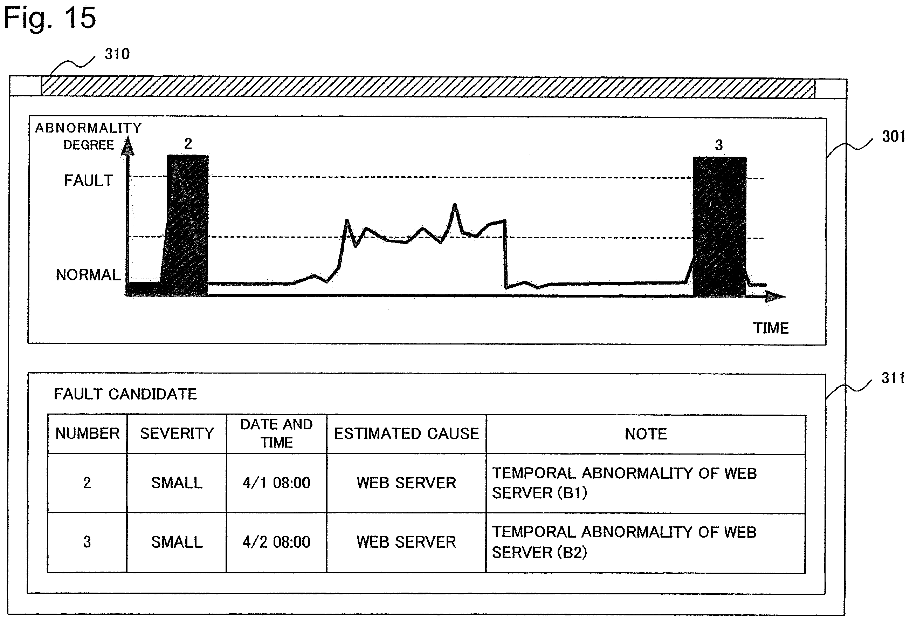

Fig. 15 is a diagram showing an example of an analysis results output screen 310 in the first exemplary embodiment of the present invention. The dialogue unit 105 outputs the analysis results output screen 310 as shown in Fig. 15 as a fault analysis result, for example. In the example of Fig. 15, the analysis results output screen 310 includes the abnormality degree graph 301 and fault candidate information 311 which indicates the estimated cause of the fault. In the fault candidate information 311, the server type and the apparatus identifier of the monitored apparatus 201 with respect to the estimated cause are indicated.

As a result, the administrator, or the like can grasp that the faults 3 is a fault similar to the fault 2 (fault of the Web server), from the contents of the fault candidate information 311.

As above, operation of the first exemplary embodiment of the present invention is completed.

Note that, in the first exemplary embodiment of the present invention, explanation was made by taking a case, as an example, in which the monitored apparatus 201 is a computer which executes service processing, however, it is not limited to this example. The monitored apparatus 201 may also be other apparatus such as a network switch or a storage as far as a configuration change can be detected based on the configuration information 127 and the correlation destruction pattern 124 can be updated according to the configuration change.

Also, in the first exemplary embodiment of the present invention, the case in which "replace" is detected as the configuration change is explained as an example. However, the configuration change of other type may be detected as far as it can be detected based on the configuration information 127. For example, the configuration change detection unit 107 may detect "duplication" (monitored apparatus of the same server type is added) as a configuration change. In this case, the configuration change detection unit 107 decides that the configuration change of "duplication" has occurred when there is a monitored apparatus 201 with the same server type as the monitored apparatus 201 of which the detection state is changed from "not detected" to "detected" in the configuration information 127, for example. And the correlation destruction pattern updating unit 108 updates the correlation destruction pattern 124 corresponding to the configuration change type "duplication" as well as a second exemplary embodiment of the present invention mentioned below.

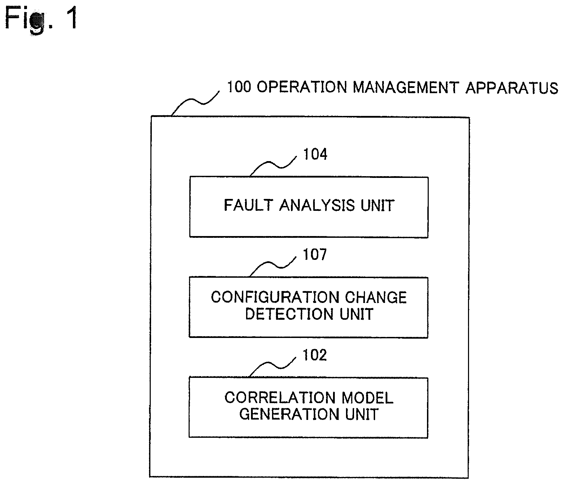

Next, a characteristic configuration of the first exemplary embodiment of the present invention will be described. Fig. 1 is a block diagram showing a characteristic configuration according to the first exemplary embodiment of the present invention.

Referring to Fig. 1, an operation management apparatus 100 includes a correlation model generation unit 102, a configuration change detection unit 107 and a fault analysis unit 104.

The correlation model generation unit 102 generates a correlation model 122 including one or more correlation functions each indicating a correlation between two different metrics among a plurality of metrics of a system. The configuration change detection unit 107 detects whether a configuration change of the system has occurred or not. The fault analysis unit 104 identifies a fault cause of the system using the correlation model 122 which is generated based on measured values of the plurality of metrics after the configuration change of the system when the configuration change of the system is detected by the configuration change detection unit 107.

According to the first exemplary embodiment of the present invention, in the invariant relational analysis, it is possible to carry out a fault analysis using an appropriate correlation model even if a system configuration has been changed. The reason is that the configuration change detection unit 107 detects a configuration change of the analysis target system 200, and the fault analysis unit 104 sets a correlation model 122 generated after the configuration change as a correlation model 122 (for analysis) for detecting a fault of the analysis target system 200.

In the case that a fault cause for detected correlation destruction is identified based on the correlation destruction pattern at time of the fault in the past according to PTL 2 and PTL 3, even if a correlation model 122 for analysis is changed with a system configuration change as mentioned above, the correlation destruction pattern does not correspond to the correlation model 122 for analysis. Therefore, it is not possible to identify the fault cause correctly even if a fault similar to the fault in the past occurs. In this case, the administrator, or the like needs to carry out analysis of the similar fault once more and register the correlation destruction pattern.

In contrast, according to the first exemplary embodiment of the present invention, even if the system configuration has been changed, it is possible to carry out a fault analysis using the appropriate correlation destruction pattern. The reason is because the correlation destruction pattern updating unit 108 updates the correlation destruction pattern 124 according to the update method corresponding to the type of the configuration change.

Further, in the case that a fault cause for detected correlation destruction is identified based on the correlation destruction pattern at time of the fault in the past according to PTL 2 and PTL 3, since the fault cause cannot be presented appropriately based on the fault in the past, there is a possibility that the analysis or the action may be delayed, or accompanying work load of the administrator or the like may increase and a mistake may be caused. In particular, in a system which is operated continuously over a long period including redundant servers, storages, and networks, the service is continued by switching them in case of a partial failure. When switching of the redundant configuration functions effectively, it is not possible to follow the configuration change appropriately, and the effect of the invariant relational analysis declines.

In contrast, according to the first exemplary embodiment of the present invention, even if the system is operated continuously over a long period, speed and precision of the invariant relational analysis can be maintained or improved. The reason is because the fault analysis unit 104 carries out a fault analysis using the correlation model 122 and the correlation destruction pattern 124 which adapt to the system after configuration change, as described above.

Moreover, according to the first exemplary embodiment of the present invention, in the invariant relational analysis, it is possible to distinguish between correlation destruction caused by a fault and correlation destruction caused by a system configuration change, with respect to detected correlation destruction. The reason is because, when a configuration change is detected, the dialogue unit 105 includes the configuration change detection information 302, which indicates that the configuration change is detected, in the configuration change detection screen 300 including the abnormality degree graph 301, which indicates time series variation of the abnormality degree, and outputs the configuration change detection screen 300.

### (Second exemplary embodiment)

Next, the second exemplary embodiment of the present invention will be explained. The second exemplary embodiment of the present invention is different from the first exemplary embodiment of the present invention in a point that the configuration change detection unit 107 detects a configuration change based on a correlation model 122.

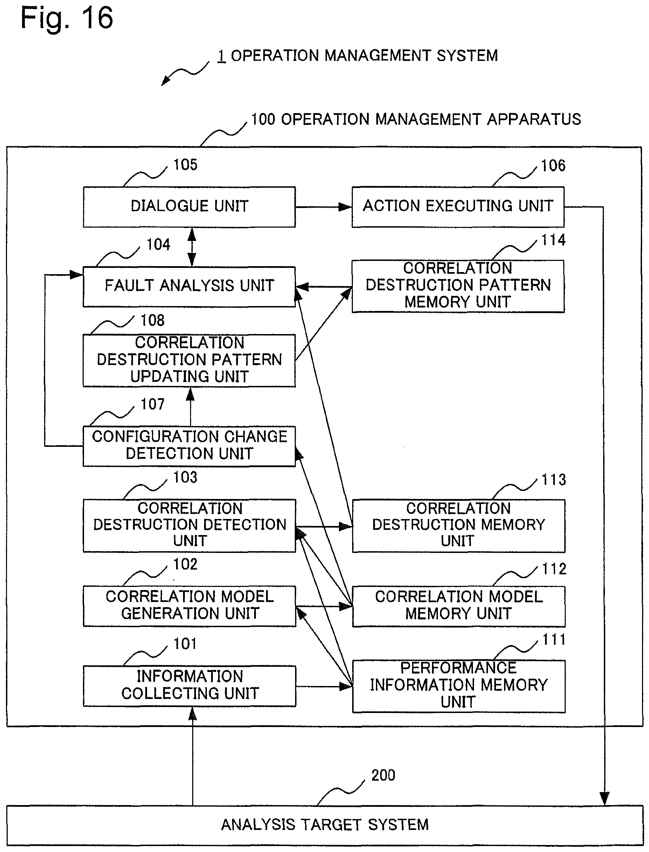

First, a configuration of the second exemplary embodiment of the present invention will be explained. Fig. 16 is a block diagram showing a configuration of the operation management system 1 in the second exemplary embodiment of the present invention.

The operation management apparatus 100 includes the information collecting unit 101, the correlation model generation unit 102, the correlation destruction detection unit 103, the fault analysis unit 104, the dialogue unit 105, the action executing unit 106, the configuration change detection unit 107, the correlation destruction pattern updating unit 108, the performance information memory unit 111, the correlation model memory unit 112, the correlation destruction memory unit 113, and the correlation destruction pattern memory unit 114.

The correlation model generation unit 102 generates a correlation model 122 of the analysis target system 200 for each predetermined modeling period.

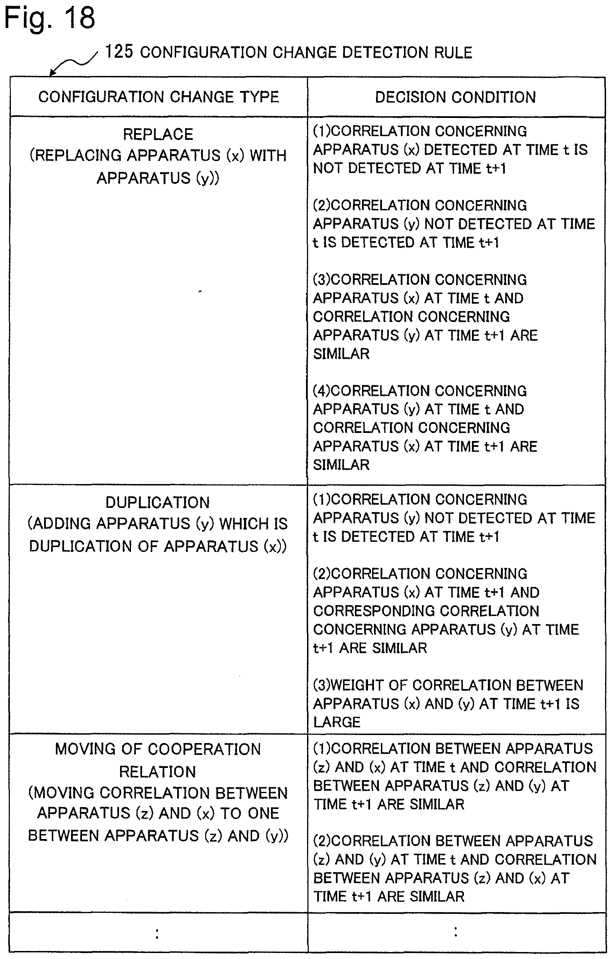

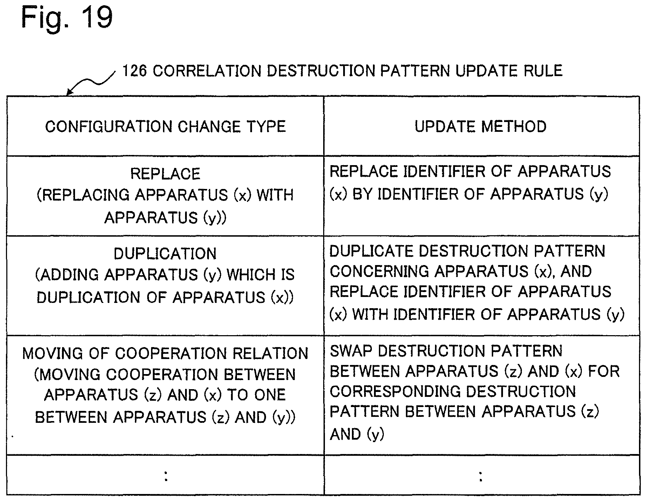

The configuration change detection unit 107 detects a configuration change in the analysis target system 200 using the correlation model 122. The configuration change detection unit 107 identifies a type of the configuration change based on the configuration change detection rule 125. Fig. 18 is a diagram showing an example of the configuration change detection rule 125 in the second exemplary embodiment of the present invention. In the example of Fig. 18, the configuration change detection rule 125 includes, for each type of the configuration change, decision conditions for deciding whether the configuration change corresponds to the type has occurred. As the decision condition, conditions concerning changing or similarity of the correlation between the current correlation model 122 and the previous correlation model 122 are set. Fig. 19 is a diagram showing an example of the correlation destruction pattern update rule 126 in the second exemplary embodiment of the present invention.

Next, operation of the operation management apparatus 100 in the second exemplary embodiment of the present invention will be explained.

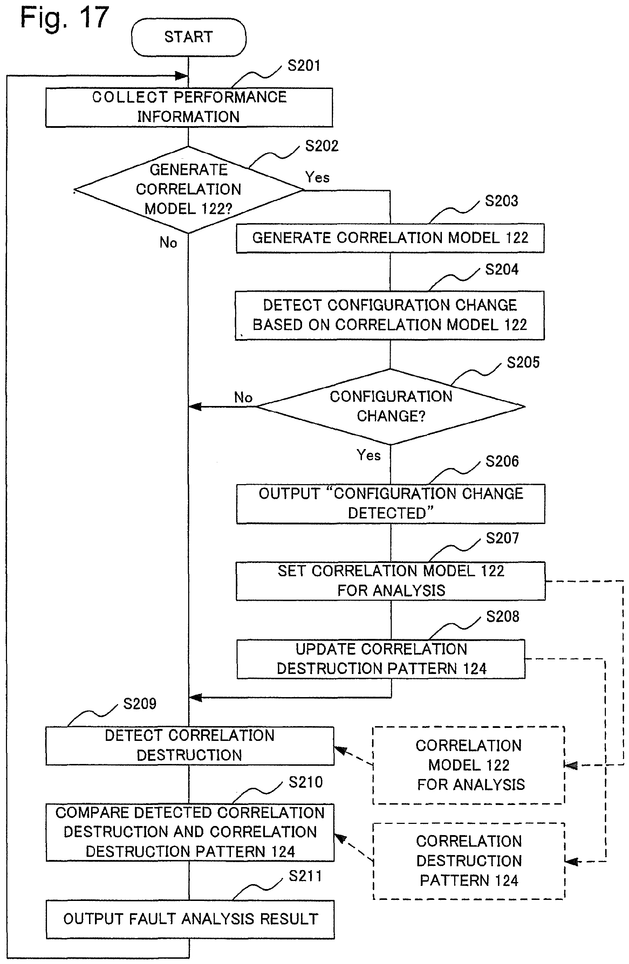

Fig. 17 is a flow chart showing processing of the operation management apparatus 100 in the second exemplary embodiment of the present invention.

First, the information collecting unit 101 of the operation management apparatus 100 collects performance information from the monitored apparatus 201 on the analysis target system 200 (Step S201). The information collecting unit 101 stores the collected performance information in the performance information memory unit 111 as the sequential performance information 121.

When the correlation model 122 is generated at a timing of the predetermined modeling period (Step S202/Yes), the correlation model generation unit 102 refers to the sequential performance information 121 in the performance information memory unit 111 and generates a correlation model 122 based on the performance information in the predetermined modeling period (Step S203). The correlation model generation unit 102 stores the generated correlation model 122 in the correlation model memory unit 112.

The configuration change detection unit 107 detects a configuration change based on the correlation model 122 (Step S204). Here, the configuration change detection unit 107 detects the configuration change according to the configuration change detection rule 125.

When the configuration change is not detected in Step S204 (Step S205/No), processing from Step S209 is carried out.

On the other hand, when the configuration change is detected in Step S204 (Step S205/Yes), the fault analysis unit 104 outputs "configuration change detected" to the administrator, or the like, via the dialogue unit 105 (Step S206).

Next, when the dialogue unit 105 receives a direction to switch a model from the administrator, or the like, the fault analysis unit 104 sets the generated correlation model 122 in Step S202 as the correlation model 122 for analysis (Step S207).

Note that, here, processing from Step S207 may be carried out without waiting for the direction from the administrator, or the like.

The correlation destruction pattern updating unit 108 updates the correlation destruction pattern 124 (Step S208). Here, the correlation destruction pattern updating unit 108 updates the correlation destruction pattern 124 according to the correlation destruction pattern update rule 126.

Hereafter, processing from generating the correlation destruction information 123 to outputting the fault analysis result (Steps S209 to S211) is similar to that of the first exemplary embodiment of the present invention (Steps S110 to S112).

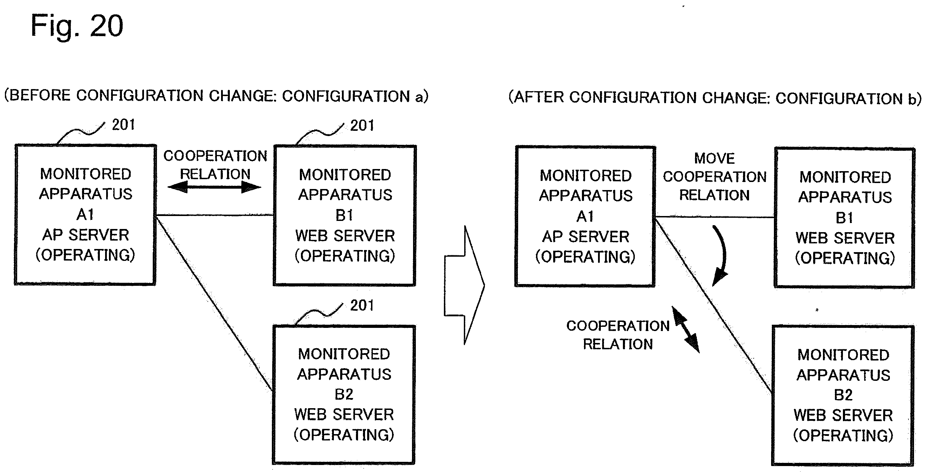

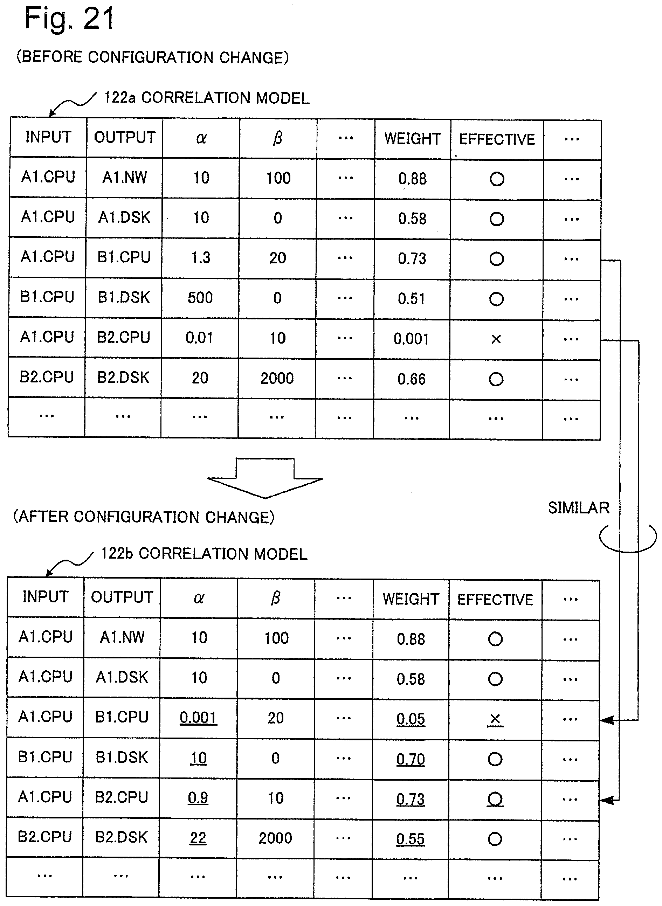

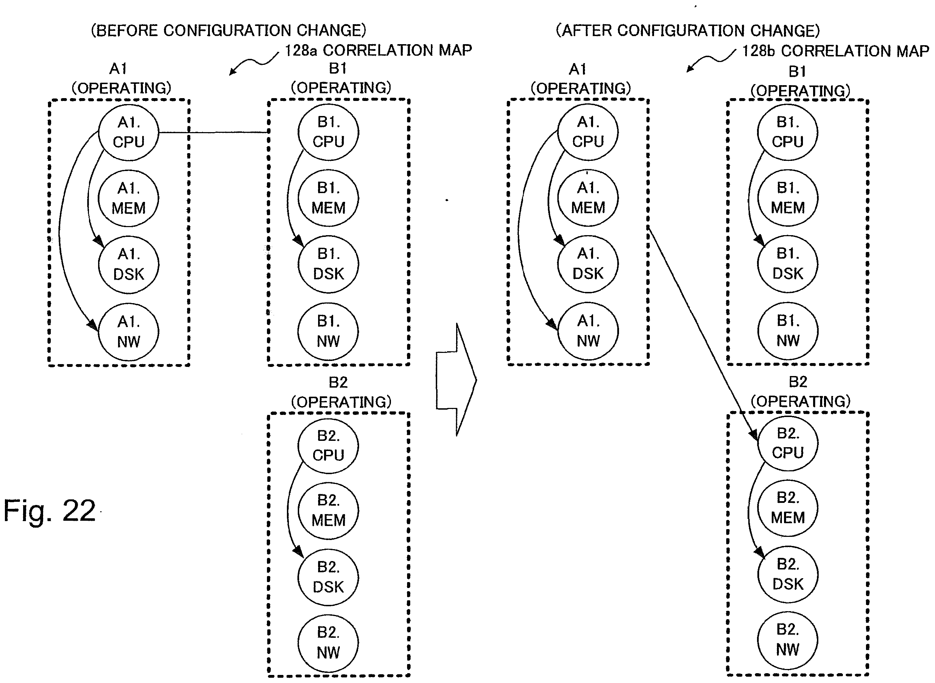

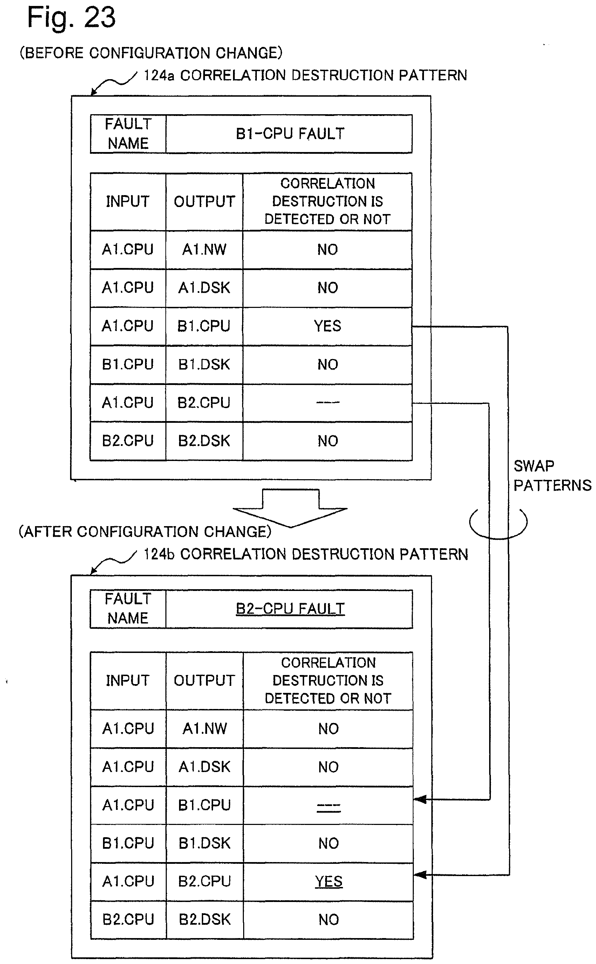

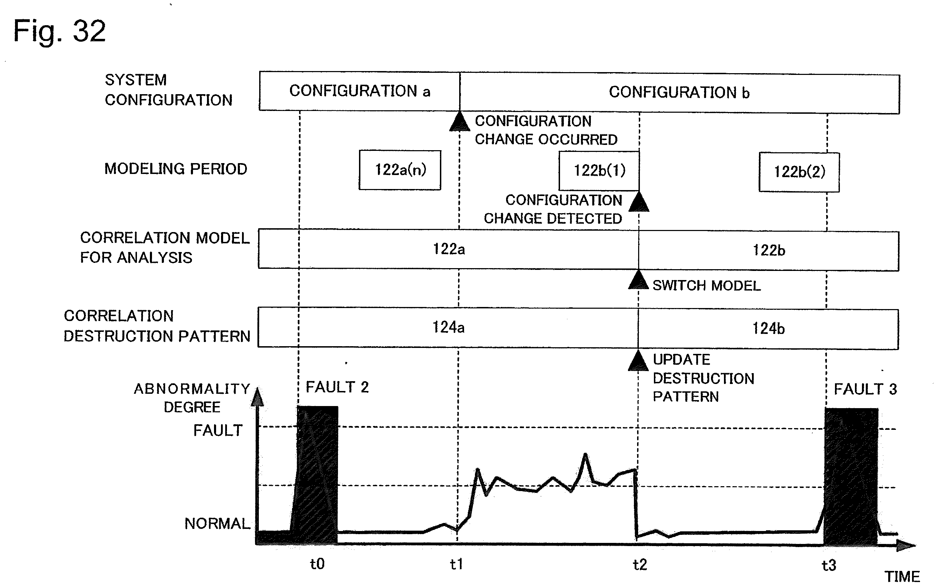

Next, a specific example of operation will be explained. Fig. 32 is a diagram showing a relation among a system configuration change, the correlation model 122, and the correlation destruction pattern 124, in the second exemplary embodiment of the present invention. Fig. 20, Fig. 24 and Fig. 28 are block diagrams showing examples of a configuration of the analysis target system 200 in the second exemplary embodiment of the present invention. Fig. 21, Fig. 25 and Fig. 29 are diagrams showing examples of a correlation model 122 in the second exemplary embodiment of the present invention. Fig. 22, Fig. 26 and Fig. 30 are diagrams showing examples of a correlation map 128 in the second exemplary embodiment of the present invention. The correlation maps 128 of Fig. 22, Fig. 26 and Fig. 30 correspond to the correlation models 122 of Fig. 21, Fig. 25 and Fig. 29, respectively. Fig. 23, Fig. 27 and Fig. 31 are diagrams showing examples of a correlation destruction pattern 124 in the second exemplary embodiment of the present invention.

First, as a first example, operation will be explained by taking a case, as an example, when the configuration of the analysis target system 200 before change is that the operational states of both of the monitored apparatuses 201 (B1 and B2) are "operating", and the monitored apparatus 201 (A1) and the monitored apparatus 201 (B1) are in a cooperation relation, with respect to the monitored apparatuses 201 (B1 and B2) of the redundant configuration, as shown in Fig. 20 (before configuration change). In this example, even if the monitored apparatus 201 (B1) is operating, the monitored apparatus 201 (B2) is also operating but executing other processing than that of the monitored apparatus 201 (B1).

In this case, it is assumed that a correlation model 122a of Fig. 21 (correlation map 128a of Fig. 22) is generated and set as the correlation model 122 for analysis. Also, it is assumed that a correlation destruction pattern 124a of Fig. 23 is generated and set as the correlation destruction pattern 124 for the fault (fault 2) of the monitored apparatus 201 (B1) (Web server) which occurred at time t0 of Fig. 32.

It is assumed that, at time t1 of Fig. 32, as shown in Fig. 20 (after configuration change), the cooperation relation between the monitored apparatus 201 (A1) and (B1) moved to one between the monitored apparatus 201 (A1) and (B2).

At time t2 of Fig. 32, the correlation model generation unit 102 generates a correlation model 122b of Fig. 21 (correlation map 128b of Fig. 22). The configuration change detection unit 107 compares the correlation model 122b with the correlation model 122a of Fig. 21, which is the previous correlation model 122. In Fig. 21, a "correlation between A1.CPU and B1.CPU" and a "correlation between A1.CPU and B2.CPU" have been changed. Also, the "correlation between A1.CPU and B1.CPU" of the correlation model 122a and the "correlation between A1.CPU and B2.CPU" of the correlation model 122b are similar. The "correlation between A1.CPU and B2.CPU" of the correlation model 122a and the "correlation between A1.CPU and B1.CPU" of the correlation model 122b, are also similar. The configuration change detection unit 107 decides that the configuration change of the configuration change type "moving of cooperation relation (moving the correlation between the monitored apparatus 201 (A1) and (B1) to one between the monitored apparatus 201 (A1) and (B2))" has occurred, according to the configuration change detection rule 125 of Fig. 18.

Here, the configuration change detection unit 107 determines that correlations are similar when a difference of each coefficient or weight of the correlation function between the correlations is equal to or smaller than a predetermined threshold value, for example. Also, the configuration change detection unit 107 may determine that the correlations are similar when a sing of each coefficient of the correlation function is inverted, when each coefficient is shifted in time series order, when each coefficient is in a fixed relation of multiplication, or when only a constant term is different, between the correlations.

Note that, in Fig. 21, a "correlation between B1.CPU and B1.DSK" and a "correlation between B2.CPU and B2.DSK", which are correlations in the monitored apparatus 201, have also been changed. However, since these are not similar, the configuration change detection unit 107 decides that the coefficients of the correlation functions of these correlations have been changed. This corresponds to a case, for example, when the monitored apparatus 201 (B2) is carrying out processing with high disk load such as batch processing independently from the monitored apparatus 201 (A1). In this case, even if the cooperation relation between the monitored apparatus 201 (A1) and the monitored apparatus 201 (B1) moves to one between the monitored apparatus 201 (A1) and the monitored apparatus 201 (B2), the correlation concerning the disk load in the monitored apparatus 201 (B2) is not influenced.

The dialogue unit 105 outputs "configuration change detected" on the configuration change detection screen 300 as shown in Fig. 14 mentioned above, for example.

Next, when the dialogue unit 105 receives a direction to switch a model from the administrator, or the like, the fault analysis unit 104 sets the correlation model 122b of Fig. 21 as the correlation model 122 for analysis.

The correlation destruction pattern updating unit 108 generates a correlation destruction pattern 124b of Fig. 23 by swapping the destruction pattern concerning the cooperation relation between the monitored apparatus 201 (A1) and the monitored apparatus 201 (B1) in the correlation destruction pattern 124a for the destruction pattern concerning the cooperation relation between the monitored apparatus 201 (A1) and the monitored apparatus 201 (B2), according to the update method corresponding to the configuration change type "moving of cooperation relation" in the correlation destruction pattern update rule 126 of Fig. 19.

Hereafter, the fault analysis is carried out using the correlation model 122b of Fig. 21 and the correlation destruction pattern 124b of Fig. 23.

Here, comparing with the first exemplary embodiment of the present invention, in the first exemplary embodiment, the configuration change is detected based on the configuration information 127. For this reason, only the change in units of the monitored apparatus 201 can be detected, and the destruction pattern is updated in units of the monitored apparatus 201. Accordingly, when, as a configuration change, a change of partial operating status of the monitored apparatus 201, such as moving of the cooperation relation, occurs, it is not possible to update the correlation destruction pattern 124, correctly.

On the other hand, in the second exemplary embodiment, the configuration change is detected based on the correlation model 122. For this reason, a change in the correlation corresponding to the change of the partial operating status mentioned above can be detected, and it is possible to update the destruction pattern in units of the correlation.

Thus, even when the change of the partial operating status, such as moving of the cooperation relation between the monitored apparatuses 201, occurs, it is possible to obtain the correlation destruction pattern 124 which adapts to the system after the configuration change.

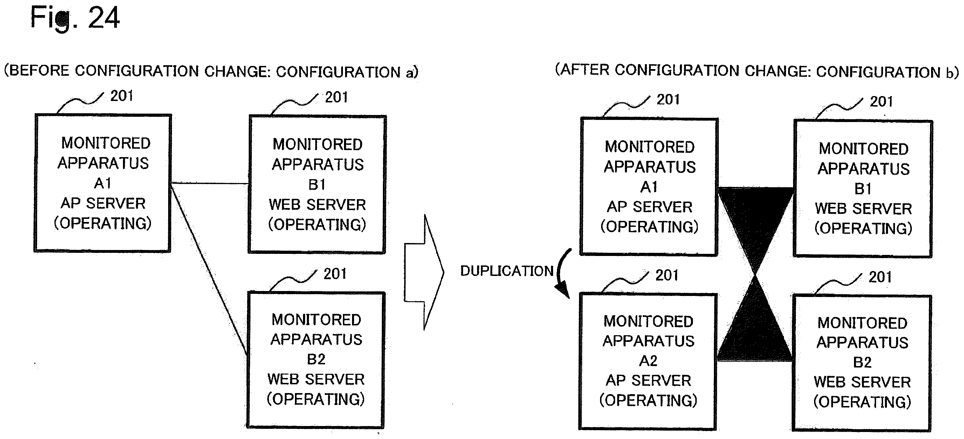

Next, as a second example, operation will be explained by taking a case, as an example, when the configuration of the analysis target system 200 before change is shown in Fig. 24 (before configuration change), as well as the first example of operation.

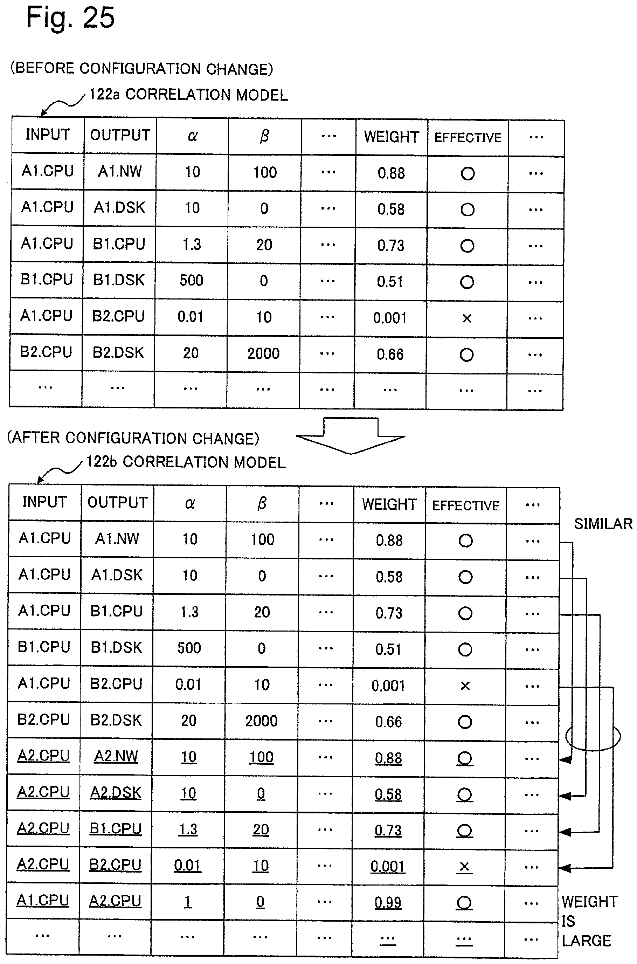

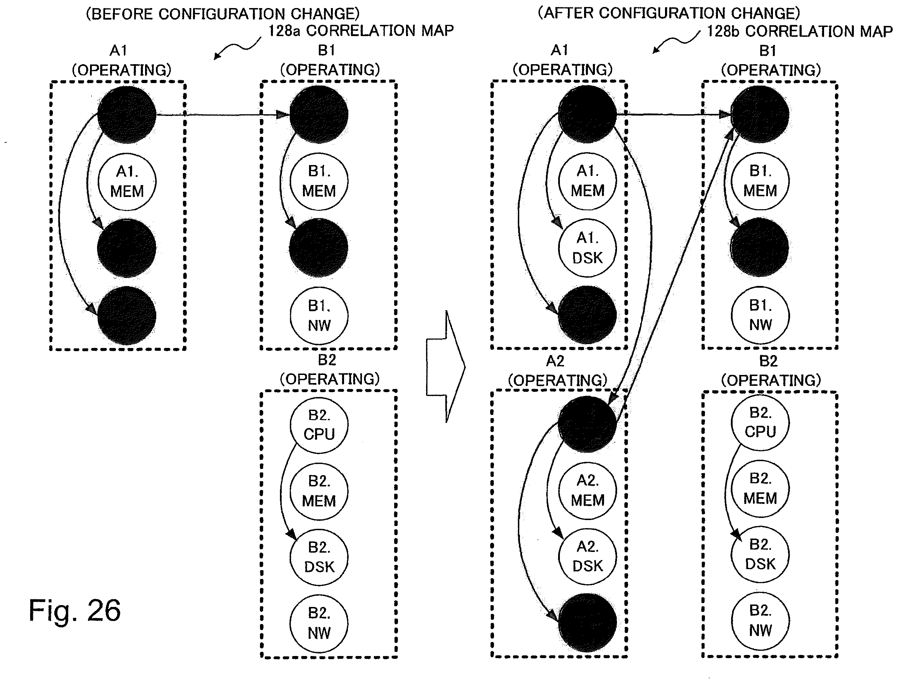

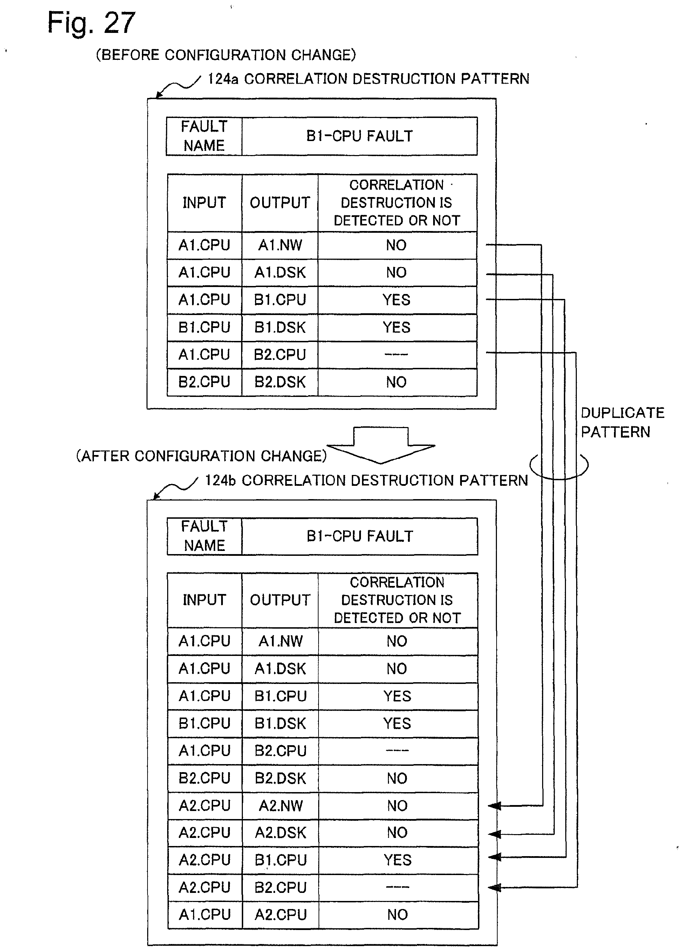

In this case, it is assumed that a correlation model 122a of Fig. 25 (correlation map 128a of Fig. 26) is generated and set as the correlation model 122 for the analysis. Also, it is assumed that a correlation destruction pattern 124a of Fig. 27 is generated and set as the correlation destruction pattern 124 for the fault (fault 2) of the monitored apparatus 201 (B1) (Web server) which occurred at time t0 of Fig. 32,

It is assumed that, at time t1 of Fig. 32, as shown in Fig. 24 (after configuration change), the monitored apparatus 201 (A2) which is duplication of the monitored apparatus 201 (A1) was added.

At time t2 of Fig. 32, the correlation model generation unit 102 generates a correlation model 122b of Fig. 25 (correlation map 128b of Fig. 26). The configuration change detection unit 107 compares the correlation model 122b with the correlation model 122a of Fig. 25, which is the previous correlation model 122. In Fig. 25, the correlation concerning the monitored apparatus 201 (A2), which was not detected in the correlation model 122a, is detected in the correlation model 122b. Also, in the correlation model 122b, a "correlation between A1.CPU and A1.NW" and a "correlation between A2.CPU and A2.NW" are similar. A "correlation between A1.CPU and A1.DSK" and a "correlation between A2.CPU and A2.DSK" are similar. A correlation between "A1.CPU and B1.CPU" and a "correlation between A2.CPU and B1.CPU" are similar. A "correlation between A1.CPU and B2.CPU" and a "correlation between A2.CPU and B2.CPU" are similar. Further, a value of a weight of a correlation between A1.CPU and A2.CPU is large. Accordingly, the configuration change detection unit 107 decides that the configuration change of the configuration change type "duplication (adding the monitored apparatus 201 (A2) which is duplication of the monitored apparatus 201 (A1))" has occurred, according to the configuration change detection rule 125 of Fig. 18.

The dialogue unit 105 outputs "configuration change detected" on the configuration change detection screen 300, as shown in Fig. 14 mentioned above, for example.

Next, when the dialogue unit 105 receives a direction to switch a model from the administrator, or the like, the fault analysis unit 104 sets the correlation model 122b of Fig. 25 as the correlation model 122 for the analysis.

The correlation destruction pattern updating unit 108 generates a correlation destruction pattern 124b of Fig. 27 by duplicating the destruction pattern concerning the monitored apparatus 201 (A1) in the correlation destruction pattern 124a and replacing the identifier of the monitored apparatus 201 (A1) with the identifier of the monitored apparatus 201 (A2), according to the update method corresponding to the configuration change type "duplication" in the correlation destruction pattern update rule 126 of Fig. 19.

Hereafter, the fault analysis is carried out using the correlation model 122b of Fig. 25 and the correlation destruction pattern 124b of Fig. 27.

Thus, even when the configuration change by duplicating the monitored apparatus 201 occurs, it is possible to obtain the correlation destruction pattern 124 which adapts to the system after the configuration change.

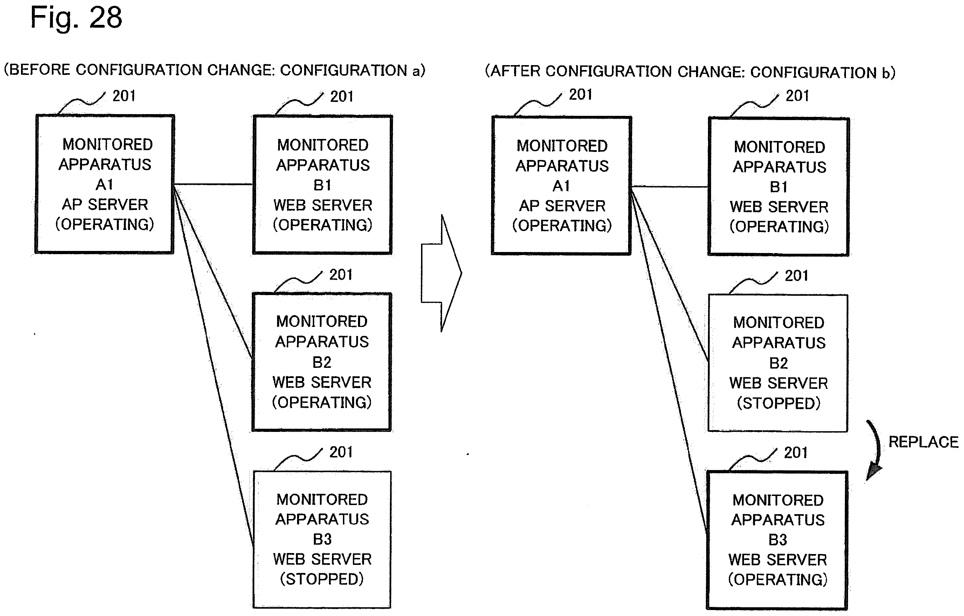

Next, as a third example, operation will be explained by taking a case, as an example, when the configuration of the analysis target system 200 before change is that the operational states of the monitored apparatuses 201 (B1 and B2) are "operating" and the operational state of the monitored apparatus 201 (B3) is "stopped", with respect to the monitored apparatuses 201 (B1, B2 and B3) of the redundant configuration, as shown in Fig. 28 (before configuration change).

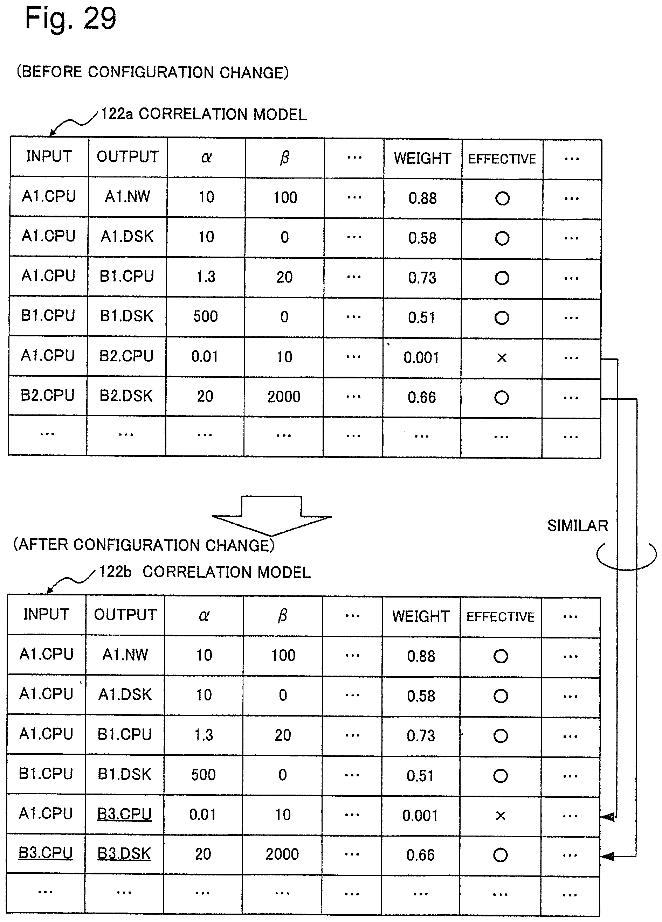

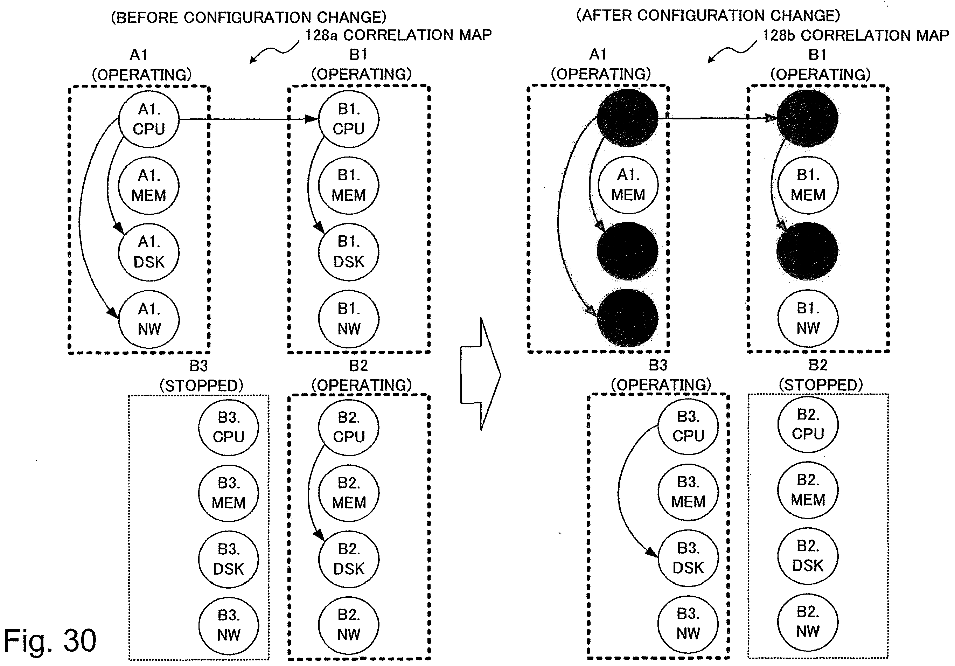

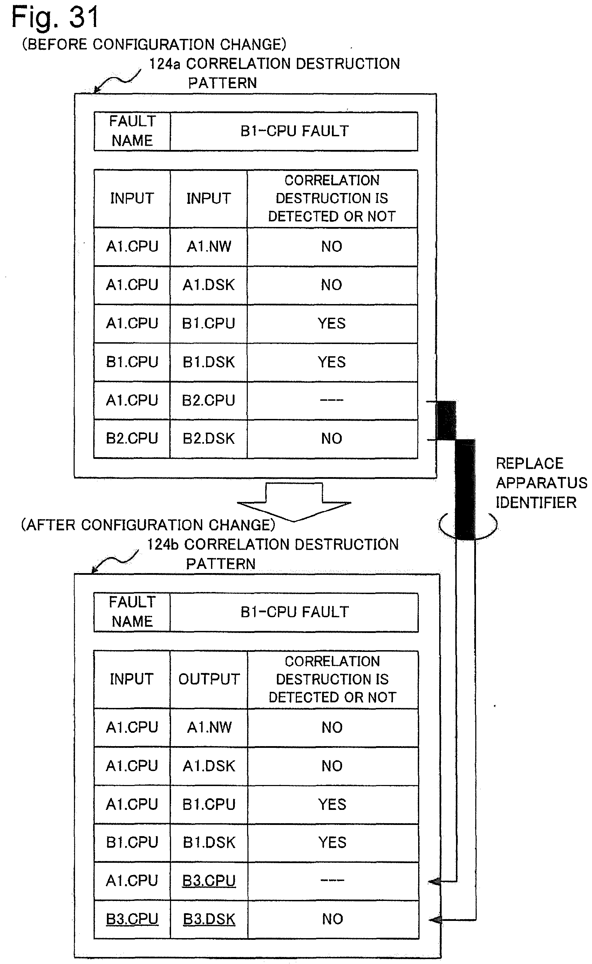

In this case, it is assumed that a correlation model 122a of Fig. 29 (correlation map 128a of Fig. 30) is generated and set as the correlation model 122 for the analysis. Also, it is assumed that a correlation destruction pattern 124a of Fig. 31 is generated and set as the correlation destruction pattern 124 for the fault (fault 2) of the monitored apparatus 201 (B1) (Web server) which occurred at time t0 of Fig. 32.

It is assumed that at time t1 of Fig. 32, by switching of the redundant configuration, the operational state of the monitored apparatus 201 (B2) was changed to "stopped" and the operational state of the monitored apparatus 201 (B3) was changed to "operating", as shown in Fig. 28 (after configuration change).

At time t2 of Fig. 32, the correlation model generation unit 102 generates a correlation model 122b of Fig. 29 (correlation map 128b of Fig. 30). The configuration change detection unit 107 compares the correlation model 122b with the correlation model 122a of Fig. 29, which is the previous correlation model 122. In Fig. 29, the correlation concerning the monitored apparatus 201 (B3), which was not detected in the correlation model 122a, is detected in the correlation model 122b. Also, the correlation concerning the monitored apparatus 201 (B2), which was detected in the correlation model 122a, is not detected in the correlation model 122b. A "correlation between A1.CPU and B2.CPU" in the correlation model 122a and a "correlation between A1.CPU and B3.CPU" in the correlation model 122b are similar. A "correlation between B2.CPU and B2.DSK" in the correlation model 122a and a "correlation between B3.CPU and B3.DSK" in the correlation model 122b are also similar. Accordingly, the configuration change detection unit 107 decides that the configuration change of the configuration change type "replace (replacing the monitored apparatus 201 (B2) with the monitored apparatus 201 (B3))" has occurred, according to the configuration change detection rule 125 of Fig. 18.

The dialogue unit 105 outputs "configuration change detected" on the configuration change detection screen 300, as shown in Fig. 14 mentioned above, for example.

Next, when the dialogue unit 105 receives a direction to switch a model from the administrator, or the like, the fault analysis unit 104 sets the correlation model 122b of Fig. 29 as the correlation model 122 for the analysis.

The correlation destruction pattern updating unit 108 generates a correlation destruction pattern 124b of Fig. 31 by replacing the identifier of the monitored apparatus 201 (B2) in the correlation destruction pattern 124a with the identifier of the monitored apparatus 201 (B3), according to the update method corresponding to the configuration change type "replace" in the correlation destruction pattern update rule 126 of Fig. 19.

Hereafter, the fault analysis is carried out using the correlation model 122b of Fig. 29 and the correlation destruction pattern 124b of Fig. 31.

Thus, even when the configuration change by replacing the monitored apparatus 201 occurs, it is possible to obtain the correlation destruction pattern 124 which adapts to the system after the configuration change, as well as the first exemplary embodiment of the present invention, without using the configuration information 127.

As above, operation of the second exemplary embodiment of the present invention is completed.

Note that, in the second exemplary embodiment of the present invention, explanation was made, as an example of the change of the partial operating status, by taking a case in which the correlation concerning the CPU use rate between the monitored apparatuses 201, which are in the cooperation relation, is changed. However, it is not limited to this example and similar effects can be obtained even when the correlation concerning an item of other performance value is changed. For example, when a network fault is identified from time series information of network traffic, changing of a correlation corresponding to switching of a partial network route or a flow control may be detected. Also, in a fault analysis of a storage apparatus, changing of a correlation corresponding to switching or exchanging of disks included in the storage apparatus may be detected. Also, in a fault analysis of an application program, changing of a correlation corresponding to a partial patch application may be detected.

Also, in the second exemplary embodiment of the present invention, explanation was made by taking a case, as examples, in which "moving of cooperation relation", "duplication" or "replace" are detected as the configuration changes, a configuration change of other type may be detected as far as it is possible to be detected based on the correlation model 122. For example, the configuration change detection unit 107 may detect "duplication of cooperation relation". In this case, for example, when a correlation, which is similar to a newly detected correlation between the monitored apparatus 201 (A1) and the monitored apparatus 201 (B2), already exists between the monitored apparatus 201 (A1) and the monitored apparatus 201 (B1) in the configuration information 127, the configuration change detection unit 107 decides that a configuration change of "duplication of a cooperation relation (a correlation between the monitored apparatuses 201 (A1) and (B1) is added to one between the monitored apparatuses 201 (A1) and (B2))" has occurred. Then the correlation destruction pattern updating unit 108 updates the correlation destruction pattern 124 by generating and adding a destruction pattern concerning the cooperation relation between the monitored apparatus 201 (A1) and the monitored apparatus 201 (B2) based on the destruction pattern concerning the cooperation relation between the monitored apparatus 201 (A1) and the monitored apparatus 201 (B1) in the correlation destruction pattern 124.

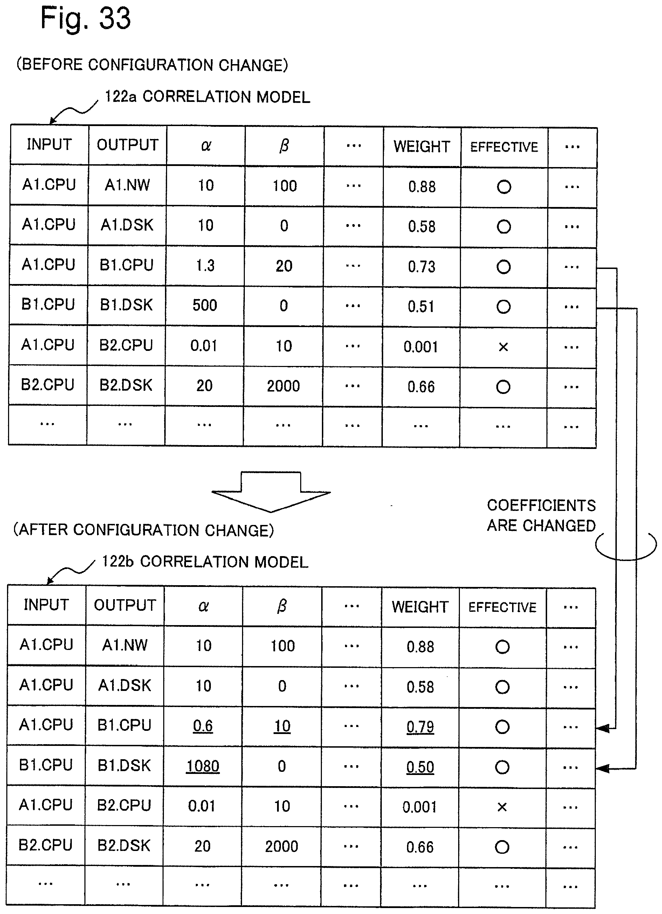

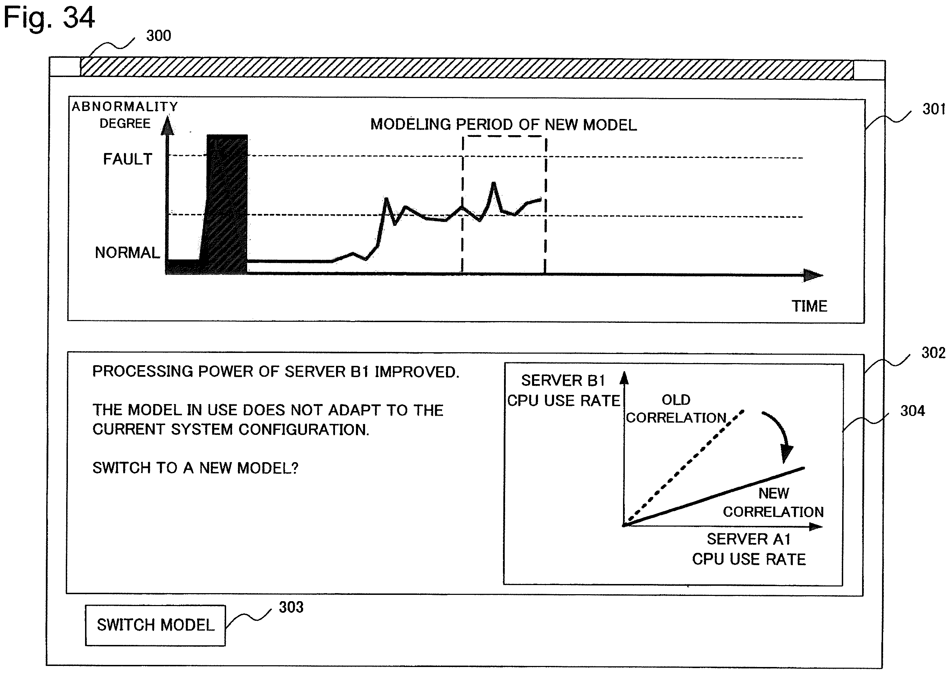

Also, the configuration change detection unit 107 may detect the configuration change which is not accompanied by moving or duplicating of a correlation. Fig. 33 is a diagram showing the other example of a correlation model 122 in the second exemplary embodiment of the present invention. Fig. 34 is a diagram showing an example of a configuration change detection screen 300 in the second exemplary embodiment of the present invention. In Fig. 33, concerning a "correlation between A1.CPU and B1.CPU" and a "correlation between B1.CPU and B1.DSK", coefficients of the correlation have been changed. This corresponds to, for example, when system enhancement (CPU change) in the monitored apparatus 201 (B1) is carried out. The configuration change detection unit 107 can detect such a configuration change of "system enhancement" by detecting the change of the coefficients of the correlation function concerning the CPU use rate of the monitored apparatus 201 (B1). Also, in this case, the dialogue unit 105 outputs "configuration change detected" on the configuration change detection screen 300, for example, as shown in Fig. 34. In the example of Fig. 34, the configuration change detection screen 300 includes correlation change information 304 which indicates a relation between metrics before the configuration change and after the configuration change with respect to the changed correlation. As a result, the administrator, or the like can grasp the system enhancement of the analysis target system 200 and its effect easily and can direct to switch to the appropriate correlation model 122.

According to the second exemplary embodiment of the present invention, in the invariant relational analysis, it is possible to carry out a fault analysis without using the configuration information 127, but using the appropriate correlation model and the correlation destruction pattern, even when the system configuration has been changed. The reason is because the configuration change detection unit 107 detects the configuration change of the analysis target system 200 based on the correlation model 122.

Also, according to the second exemplary embodiment of the present invention, in the invariant relational analysis, even when a change of the partial operating status of the monitored apparatus 201 has occurred as the configuration change, it is possible to obtain the correlation destruction pattern 124 which adapts to the system after the configuration change. The reason is because the configuration change detection unit 107 detects the change in units of the correlation of the correlation model 122, and the correlation destruction pattern updating unit 108 updates the correlation destruction pattern 124 in units of the correlation. As a result, the correlation destruction pattern 124 with higher adaptability can be generated compared with the first exemplary embodiment of the present invention.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

For example, the configuration change detection unit 107 may detect a configuration change using both of the detection result of the configuration change based on the configuration information 127 shown in the first exemplary embodiment and the detection result of the configuration change based on the correlation model 122 shown in the second exemplary embodiment. For example, when changing of the operating status explained as the first to the third example in the second exemplary embodiment occurred in sequence, there is a possibility that the configuration change detection unit 107 is not able to detect the configuration change correctly only from changing of the correlation. In this case, the configuration change detection unit 107 can detect the configuration change more correctly by using the detection result of the configuration change detected based on the configuration information 127 as well. As a result, even when a complicated change of the correlation has occurred, more correct correlation destruction pattern 124 can be generated.

This application is based upon and claims the benefit of priority from Japanese Patent Application No. 2012-057337, filed on March 14, 2012.

### [Reference Signs List]

1 Operation management system
100 Operation management apparatus
101 Information collecting unit
102 Correlation model generation unit
103 Correlation destruction detection unit
104 Fault analysis unit
105 Dialogue unit
106 Action executing unit
107 Configuration change detection unit
108 Correlation destruction pattern updating unit
111 Performance information memory unit
112 Correlation model memory unit
113 Correlation destruction memory unit
114 Correlation destruction pattern memory unit
117 Configuration information memory unit
121 Sequential performance information
122 Correlation model
123 Correlation destruction information
124 Correlation destruction pattern
125 Configuration change detection rule
126 Correlation destruction pattern update rule
127 Configuration information
128 Correlation map
200 Analysis target system
201 Monitored apparatus
300 Configuration change detection screen
301 Abnormality degree graph
302 Configuration change detection information
303 Button
304 Correlation change information
310 Analysis results output screen
311 Fault candidate information

## Claims

1. An operation management apparatus (100) comprising:
a correlation model generation means (102) for generating a correlation model including one or more correlation functions each indicating a correlation between two different metrics among a plurality of metrics of a system, the metric being a performance index of the system, the correlation function being a function which estimates, from a value of one metric in two different metrics, a value of the other metric in the two different metrics;
a configuration change detection means (107) for detecting whether a configuration change of the system has occurred or not; wherein the generation model generation means are adapted to, when a configuration change is detected (S105), generate a correlation model based on the performance information in a predetermined modeling period collected after the configuration change detection (S107); and
a fault analysis means (104) for identifying a fault cause of the system using the correlation model which is generated based on measured values of the plurality of metrics after the configuration change of the system when the configuration change of the system is detected by the configuration change detection means (107), and for setting the generated correlation model as correlation model to be used (S108)
wherein destruction of a correlation included in the correlation model is defined as correlation destruction,
wherein the fault analysis means (104) is configured to identify the fault cause of the system by comparing status of correlation destruction detected for newly measured values of the plurality of metrics and a correlation destruction pattern indicating status of correlation destruction at time of a fault of the system occurred in the past, and
wherein the correlation destruction is detected if a difference between a value estimated by inputting a newly inputted value of one metric into the correlation function and a newly inputted value of the other metric is equal to or greater than a predetermined value,
further comprising a correlation destruction pattern updating means (108) for correcting the correlation destruction pattern based on the correlation model used after the configuration change when the configuration change of the system is detected by the configuration change detection means (107), (S109) and
wherein the fault analysis means (104) is configured to identify the fault cause of the system by using the corrected correlation destruction pattern when the configuration change of the system is detected by the configuration change detection means (107).

2. The operation management apparatus (100) according to claim 1, wherein the configuration change detection means (107) is configured to detect whether
the configuration change of the system has occurred or not based on changing of attribute information of each of one or more apparatuses to be monitored included in the system.

3. The operation management apparatus (100) according to claim 1, wherein the configuration change detection means (107) is configured to detect whether
the configuration change of the system has occurred or not based on changing of the correlation model generated by the correlation model generation means (102).

4. The operation management apparatus (100) according to claim 2 or 3, wherein the correlation destruction pattern is configured to indicate whether the
correlation destruction of each of one or more correlations included in the correlation model has occurred or not; and
when replacement of a first monitored apparatus included in the system with a second monitored apparatus having the same configuration as the first monitored apparatus is detected by the configuration change detection means (107), the correlation destruction pattern updating means (108) is configured to change
information on whether the correlation destruction of the correlation concerning the first monitored apparatus has occurred or not to information on whether the correlation destruction of the correlation concerning the second monitored apparatus has occurred or not, in the correlation destruction pattern, and
when addition of the second monitored apparatus having the same configuration as the first monitored apparatus included in the system is detected by the configuration change detection means (107), the correlation destruction pattern updating means (108) is configured to generate information on whether the correlation destruction of the correlation concerning the second monitored apparatus has occurred or not based on information on whether the correlation destruction of the correlation concerning the first monitored apparatus has occurred or not in the correlation destruction pattern, and is configured to add the generated information to the correlation destruction pattern.

5. The operation management apparatus (100) according to claim 3, wherein the correlation destruction pattern indicates whether the correlation destruction of each of one or more correlations included in the correlation model; and
when moving of the correlation between a first monitored apparatus and a second monitored apparatus to the correlation between the first monitored apparatus and a third monitored apparatus included in the system is detected by the configuration change detection means (107), the correlation destruction pattern updating means (108) is configured to change information on whether the correlation destruction of the correlation between the first monitored apparatus and the second monitored apparatus has occurred or not to information on whether the correlation destruction of the correlation between the first monitored apparatus and the third monitored apparatus has occurred or not, in the correlation destruction pattern; and when addition of the correlation between the first monitored apparatus and the second monitored apparatus to the correlation between the first monitored apparatus and the third monitored apparatus included in the system is detected by the configuration change detection means (107), the correlation destruction pattern updating means (108) is configured to generate information on whether the correlation destruction of the correlation between the first monitored apparatus and the third monitored apparatus has occurred or not based on information on whether the correlation destruction of the correlation between the first monitored apparatus and the second monitored apparatus has occurred or not in the correlation destruction pattern, and is configured to add the generated information to the correlation destruction pattern.

6. An operation management method comprising:
generating a correlation model including one or more correlation functions each indicating a correlation between two different metrics among a plurality of metrics of a system, the metric being a performance index of the system, the correlation function being a function which estimates, from a value of one metric in two different metrics, a value of the other metric in the two different metrics;
detecting whether a configuration change of the system has occurred or not; wherein when a configuration change is detected (S105), generating a correlation model based on the performance information in a predetermined modeling period collected after the configuration change detection (S107); and
identifying a fault cause of the system using the correlation model which is generated based on measured values of the plurality of metrics after the configuration change of the system when the configuration change of the system is detected, and setting the generated correlation model as correlation model to be used (S108) wherein destruction of a correlation included in the correlation model is defined as correlation destruction,
wherein the identifying identifies the fault cause of the system by comparing status of correlation destruction detected for newly measured values of the plurality of metrics and a correlation destruction pattern indicating status of correlation destruction at time of a fault of the system occurred in the past,
wherein the correlation destruction is detected if a difference between a value estimated by inputting a newly inputted value of one metric into the correlation function and a newly inputted value of the other metric is equal to or greater than a predetermined value,
wherein the correlation destruction pattern is corrected based on the correlation model used after the configuration change when the configuration change of the system is detected, and
wherein the fault cause of the system is identified by using the corrected correlation destruction pattern when the configuration change of the system is detected.

7. A computer readable storage medium recording thereon a program, causing a computer to perform a method comprising:
generating a correlation model including one or more correlation functions each indicating a correlation between two different metrics among a plurality of metrics of a system, the metric being a performance index of the system, the correlation function being a function which estimates, from a value of one metric in two different metrics, a value of the other metric in the two different metrics;
detecting whether a configuration change of the system has occurred or not; wherein when a configuration change is detected (S105), generating a correlation model based on the performance information in a predetermined modeling period collected after the configuration change detection (S107); and
identifying a fault cause of the system using the correlation model which is generated based on measured values of the plurality of metrics after the configuration change of the system when the configuration change of the system is detected and setting the generated correlation model as correlation model to be used (S108), wherein destruction of a correlation included in the correlation model is defined as correlation destruction,
wherein the identifying identifies the fault cause of the system by comparing status of correlation destruction detected for newly measured values of the plurality of metrics and the correlation destruction pattern indicating status of correlation destruction at time of a fault of the system occurred in the past,
wherein the correlation destruction is detected if a difference between a value estimated by inputting a newly inputted value of one metric into the correlation function and a newly inputted value of the other metric is equal to or greater than a predetermined value,
wherein the correlation destruction pattern is corrected based on the correlation model used after the configuration change when the configuration change of the system is detected, and
wherein the fault cause of the system is identified by using the corrected correlation destruction pattern when the configuration change of the system is detected.

## Patentansprüche

1. Betriebsverwaltungsvorrichtung (100), die aufweist:
ein Korrelationsmodell-Erzeugungsmittel (102) zum Erzeugen eines Korrelationsmodells, das eine oder mehrere Korrelationsfunktionen aufweist, die jeweils eine Korrelation zwischen zwei unterschiedlichen Metriken unter einer Vielzahl von Metriken eines Systems anzeigen, wobei die Metrik ein Leistungsindex des Systems ist, wobei die Korrelationsfunktion eine Funktion ist, die aus einem Wert einer Metrik in zwei unterschiedlichen Metriken einen Wert der anderen Metrik in den zwei unterschiedlichen Metriken schätzt;
ein Konfigurationsänderungs-Erfassungsmittel (107) zum Erfassen, ob eine Konfigurationsänderung des Systems stattgefunden hat oder nicht;
wobei das Korrelationsmodell-Erzeugungsmittel eingerichtet ist, wenn eine Konfigurationsänderung erfasst wird (S105), ein Korrelationsmodell beruhend auf den Leistungsinformationen in einer vorgegebenen Modellierungsperiode zu erzeugen, die nach der Konfigurationsänderungserfassung gesammelt werden (S107); und
ein Fehleranalysemittel (104) zum Identifizieren eines Fehlergrunds des Systems unter Verwendung des Korrelationsmodells, das beruhend auf Messwerten der Vielzahl der Metriken nach der Konfigurationsänderung des Systems erzeugt wird, wenn die Konfigurationsänderung des Systems durch das Konfigurationsänderungs-Erfassungsmittel (107) erfasst wird, und zum Einstellen des erzeugten Korrelationsmodells als Korrelationsmodell, das verwendet werden soll (S108),
wobei eine Zerstörung einer im Korrelationsmodell enthaltenen Korrelation als Korrelationszerstörung definiert ist,
wobei das Fehleranalysemittel (104) konfiguriert ist, den Fehlergrund des Systems durch Vergleichen eines Zustands der Korrelationszerstörung, die für neue Messwerte der Vielzahl der Metriken erfasst wird, und eines Korrelationszerstörungsmusters zu identifizieren, das den Zustand der Korrelationszerstörung zum Zeitpunkt eines Fehlers des Systems anzeigt, der in der Vergangenheit aufgetreten ist, und
wobei die Korrelationszerstörung erfasst wird, wenn eine Differenz zwischen einem Wert, der durch Eingeben eines neu eingegebenen Werts einer Metrik in die Korrelationsfunktion geschätzt wird, und einem neu eingegebenen Wert der anderen Metrik gleich oder größer als ein vorgegebener Wert ist,
das ferner ein Korrelationszerstörungsmuster-Aktualisierungsmittel (108) zum Korrigieren des Korrelationszerstörungsmusters beruhend auf dem Korrelationsmodell aufweist, das nach der Konfigurationsänderung verwendet wird, wenn die Konfigurationsänderung des Systems durch das Konfigurationsänderungs-Erfassungsmittel (107) erfasst wird (S109), und
wobei das Fehleranalysemittel (104) konfiguriert ist, den Fehlergrund des Systems durch Verwenden des korrigierten Korrelationszerstörungsmusters zu identifizieren, wenn die Konfigurationsänderung des Systems durch das Konfigurationsänderungs-Erfassungsmittel (107) erfasst wird.

2. Betriebsverwaltungsvorrichtung (100) nach Anspruch 1, wobei das Konfigurationsänderungs-Erfassungsmittel (107) konfiguriert ist, beruhend auf einer Änderung von Attributinformationen von jedem von einem oder mehreren zu überwachenden Vorrichtungen, die im System enthalten sind, zu erfassen, ob die Konfigurationsänderung des Systems stattgefunden hat oder nicht.

3. Betriebsverwaltungsvorrichtung (100) nach Anspruch 1, wobei das Konfigurationsänderungs-Erfassungsmittel (107) konfiguriert ist, beruhend auf einer Änderung des durch das Korrelationsmodell-Erzeugungsmittel (102) erzeugten Korrelationsmodells zu erfassen, ob die Konfigurationsänderung des Systems stattgefunden hat oder nicht.

4. Betriebsverwaltungsvorrichtung (100) nach Anspruch 2 oder 3, wobei das Korrelationszerstörungsmuster konfiguriert ist, anzuzeigen, ob die Korrelationszerstörung von jeder von einer oder mehreren im Korrelationsmodell enthaltenen Korrelationen stattgefunden hat oder nicht; und
wenn ein Ersatz einer ersten überwachten Vorrichtung, die im System enthalten ist, durch eine zweite überwachte Vorrichtung, die dieselbe Konfiguration wie die erste überwachte Vorrichtung aufweist, durch das Konfigurationsänderungs-Erfassungsmittel (107) erfasst wird, das Korrelationszerstörungsmuster-Aktualisierungsmittel (108) konfiguriert ist, Informationen darüber, ob die Korrelationszerstörung der Korrelation hinsichtlich der ersten überwachten Vorrichtung stattgefunden hat oder nicht, in Informationen darüber, ob die Korrelationszerstörung der Korrelation hinsichtlich der zweiten überwachten Vorrichtung stattgefunden hat oder nicht, im Korrelationszerstörungsmuster zu ändern, und
wenn eine Hinzufügung der zweiten überwachten Vorrichtung, die dieselbe Konfiguration wie die erste überwachte Vorrichtung aufweist, die im System enthalten ist, durch das Konfigurationsänderungs-Erfassungsmittel (107) erfasst wird, das Korrelationszerstörungsmuster-Aktualisierungsmittel (108) konfiguriert ist, Informationen darüber, ob die Korrelationszerstörung der Korrelation hinsichtlich der zweiten überwachten Vorrichtung stattgefunden hat oder nicht, beruhend auf Informationen darüber, ob die Korrelationszerstörung der Korrelation hinsichtlich der ersten überwachten Vorrichtung stattgefunden hat oder nicht, im Korrelationszerstörungsmuster zu erzeugen, und konfiguriert ist, die erzeugten Informationen zum Korrelationszerstörungsmuster hinzuzufügen.

5. Betriebsverwaltungsvorrichtung (100) nach Anspruch 3, wobei das Korrelationszerstörungsmuster anzeigt, ob die Korrelationszerstörung von jeder von einer oder mehreren im Korrelationsmodell enthaltenen Korrelationen stattgefunden hat oder nicht; und
wenn eine Bewegung der Korrelation zwischen einer ersten überwachten Vorrichtung und einer zweiten überwachten Vorrichtung zur Korrelation zwischen der ersten überwachten Vorrichtung und einer dritten überwachten Vorrichtung, die im System enthalten sind, durch das Konfigurationsänderungs-Erfassungsmittel (107) erfasst wird, das Korrelationszerstörungsmuster-Aktualisierungsmittel (108) konfiguriert ist, Informationen darüber, ob die Korrelationszerstörung der Korrelation zwischen der ersten überwachten Vorrichtung und der zweiten überwachten Vorrichtung stattgefunden hat oder nicht, in Informationen darüber, ob die Korrelationszerstörung der Korrelation zwischen der ersten überwachten Vorrichtung und der dritten überwachten Vorrichtung stattgefunden hat oder nicht, im Korrelationszerstörungsmuster zu ändern; und
wenn eine Hinzufügung der Korrelation zwischen der ersten überwachten Vorrichtung und der zweiten überwachten Vorrichtung zur Korrelation zwischen der ersten überwachten Vorrichtung und der dritten überwachten Vorrichtung, die im System enthalten sind, durch das Konfigurationsänderungs-Erfassungsmittel (107) erfasst wird, das Korrelationszerstörungsmuster-Aktualisierungsmittel (108) konfiguriert ist, Informationen darüber, ob die Korrelationszerstörung der Korrelation zwischen der ersten überwachten Vorrichtung und der dritten überwachten Vorrichtung stattgefunden hat oder nicht, beruhend auf Informationen darüber, ob die Korrelationszerstörung der Korrelation zwischen der ersten überwachten Vorrichtung und der zweiten überwachten Vorrichtung stattgefunden hat oder nicht, im Korrelationszerstörungsmuster zu erzeugen, und konfiguriert ist, die erzeugten Informationen zum Korrelationszerstörungsmuster hinzuzufügen.

6. Betriebsverwaltungsverfahren, das aufweist:
Erzeugen eines Korrelationsmodells, das eine oder mehrere Korrelationsfunktionen aufweist, die jeweils eine Korrelation zwischen zwei unterschiedlichen Metriken unter einer Vielzahl von Metriken eines Systems anzeigen, wobei die Metrik ein Leistungsindex des Systems ist, wobei die Korrelationsfunktion eine Funktion ist, die aus einem Wert einer Metrik in zwei unterschiedlichen Metriken einen Wert der anderen Metrik in den zwei unterschiedlichen Metriken schätzt;
Erfassen, ob eine Konfigurationsänderung des Systems stattgefunden hat oder nicht; wobei wenn eine Konfigurationsänderung erfasst wird (S105), Erzeugen eines Korrelationsmodells beruhend auf den Leistungsinformationen in einer vorgegebenen Modellierungsperiode, die nach der Konfigurationsänderungserfassung gesammelt werden (S107); und
Identifizieren eines Fehlergrunds des Systems unter Verwendung des Korrelationsmodells, das beruhend auf Messwerten der Vielzahl der Metriken nach der Konfigurationsänderung des Systems erzeugt wird, wenn die Konfigurationsänderung des Systems erfasst wird, und Einstellen des erzeugten Korrelationsmodells als das Korrelationsmodell, das verwendet werden soll (S108), wobei eine Zerstörung einer im Korrelationsmodell enthaltenen Korrelation als Korrelationszerstörung definiert ist, wobei das Identifizieren den Fehlergrund des Systems durch Vergleichen eines Zustands der Korrelationszerstörung, die für neue Messwerte der Vielzahl der Metriken erfasst wird, und eines Korrelationszerstörungsmusters identifiziert, das den Zustand der Korrelationszerstörung zum Zeitpunkt eines Fehlers des Systems anzeigt, der in der Vergangenheit aufgetreten ist,
wobei die Korrelationszerstörung erfasst wird, wenn eine Differenz zwischen einem Wert, der durch Eingeben eines neu eingegebenen Werts einer Metrik in die Korrelationsfunktion geschätzt wird, und einem neu eingegebenen Wert der anderen Metrik gleich oder größer als ein vorgegebener Wert ist,
wobei das Korrelationszerstörungsmuster beruhend auf dem Korrelationsmodell korrigiert wird, das nach der Konfigurationsänderung verwendet wird, wenn die Konfigurationsänderung des Systems erfasst wird, und
wobei der Fehlergrund des Systems durch Verwenden des korrigierten Korrelationszerstörungsmusters identifiziert wird, wenn die Konfigurationsänderung des Systems erfasst wird.

7. Computerlesbares Speichermedium, auf dem ein Programm aufgezeichnet ist, das einen Computer veranlasst, ein Verfahren auszuführen, das aufweist:
Erzeugen eines Korrelationsmodells, das eine oder mehrere Korrelationsfunktionen aufweist, die jeweils eine Korrelation zwischen zwei unterschiedlichen Metriken unter einer Vielzahl von Metriken eines Systems anzeigen, wobei die Metrik ein Leistungsindex des Systems ist, wobei die Korrelationsfunktion eine Funktion ist, die aus einem Wert einer Metrik in zwei unterschiedlichen Metriken einen Wert der anderen Metrik in den zwei unterschiedlichen Metriken schätzt;
Erfassen, ob eine Konfigurationsänderung des Systems stattgefunden hat oder nicht; wobei wenn eine Konfigurationsänderung erfasst wird (S105), Erzeugen eines Korrelationsmodells beruhend auf den Leistungsinformationen in einer vorgegebenen Modellierungsperiode, die nach der Konfigurationsänderungserfassung gesammelt werden (S107); und
Identifizieren eines Fehlergrunds des Systems unter Verwendung des Korrelationsmodells, das beruhend auf Messwerten der Vielzahl der Metriken nach der Konfigurationsänderung des Systems erzeugt wird, wenn die Konfigurationsänderung des Systems erfasst wird, und Einstellen des erzeugten Korrelationsmodells als das Korrelationsmodell, das verwendet werden soll (S 108), wobei eine Zerstörung einer im Korrelationsmodell enthaltenen Korrelation als Korrelationszerstörung definiert ist,
wobei das Identifizieren den Fehlergrund des Systems durch Vergleichen eines Zustands der Korrelationszerstörung, die für neue Messwerte der Vielzahl der Metriken erfasst wird, und des Korrelationszerstörungsmusters identifiziert, das den Zustand der Korrelationszerstörung zum Zeitpunkt eines Fehlers des Systems anzeigt, der in der Vergangenheit aufgetreten ist,
wobei die Korrelationszerstörung erfasst wird, wenn eine Differenz zwischen einem Wert, der durch Eingeben eines neu eingegebenen Werts einer Metrik in die Korrelationsfunktion geschätzt wird, und einem neu eingegebenen Wert der anderen Metrik gleich oder größer als ein vorgegebener Wert ist,
wobei das Korrelationszerstörungsmuster beruhend auf dem Korrelationsmodell korrigiert wird, das nach der Konfigurationsänderung verwendet wird, wenn die Konfigurationsänderung des Systems erfasst wird, und
wobei der Fehlergrund des Systems durch Verwenden des korrigierten Korrelationszerstörungsmusters identifiziert wird, wenn die Konfigurationsänderung des Systems erfasst wird.

## Revendications

1. Appareil de gestion de fonctionnement (100) comprenant :
un moyen de génération de modèle de corrélation (102) pour générer un modèle de corrélation comportant une ou plusieurs fonctions de corrélation indiquant chacune une corrélation entre deux métriques différentes parmi une pluralité de métriques d'un système, la métrique étant un indice de performance du système, la fonction de corrélation étant une fonction qui estime, à partir d'une valeur d'une métrique de deux métriques différentes, une valeur de l'autre métrique des deux métriques différentes ;
un moyen de détection de changement de configuration (107) pour détecter si un changement de configuration du système s'est produit ou non ; dans lequel le moyen de génération de modèle de corrélation est adapté, lorsqu'un changement de configuration est détecté (S105), pour générer un modèle de corrélation d'après les informations de performance pendant une période de modélisation prédéterminée recueillies après la détection de changement de configuration (S107) ; et
un moyen d'analyse de défaillance (104) pour identifier une cause de défaillance du système à l'aide du modèle de corrélation qui est généré d'après des valeurs mesurées de la pluralité de métriques après le changement de configuration du système lorsque le changement de configuration du système est détecté par le moyen de détection de changement de configuration (107), et pour établir le modèle de corrélation généré en tant que modèle de corrélation à utiliser (S108)
dans lequel une destruction d'une corrélation incluse dans le modèle de corrélation est définie en tant que destruction de corrélation,
dans lequel le moyen d'analyse de défaillance (104) est configuré pour identifier la cause de défaillance du système en comparant un statut de destruction de corrélation détecté pour des valeurs nouvellement mesurées de la pluralité de métriques et un schéma de destruction de corrélation indiquant un statut de destruction de corrélation au moment d'une défaillance du système qui s'est produite par le passé, et
dans lequel la destruction de corrélation est détectée si une différence entre une valeur estimée en fournissant en entrée une valeur nouvellement entrée d'une métrique dans la fonction de corrélation et une valeur nouvellement entrée de l'autre métrique est supérieure ou égale à une valeur prédéterminée,
comprenant en outre un moyen de mise à jour de schéma de destruction de corrélation (108) pour corriger le schéma de destruction de corrélation d'après le modèle de corrélation utilisé après le changement de configuration lorsque le changement de configuration du système est détecté par le moyen de détection de changement de configuration (107), (S109) et
dans lequel le moyen d'analyse de défaillance (104) est configuré pour identifier la cause de défaillance du système en utilisant le schéma de destruction de corrélation corrigé lorsque le changement de configuration du système est détecté par le moyen de détection de changement de configuration (107).

2. Appareil de gestion de fonctionnement (100) selon la revendication 1, dans lequel le moyen de détection de changement de configuration (107) est configuré pour détecter si le changement de configuration du système s'est produit ou non d'après un changement d'informations d'attribut de chacun des un ou plusieurs appareils à surveiller inclus dans le système.

3. Appareil de gestion de fonctionnement (100) selon la revendication 1, dans lequel le moyen de détection de changement de configuration (107) est configuré pour détecter si le changement de configuration du système s'est produit ou non d'après un changement du modèle de corrélation généré par le moyen de génération de modèle de corrélation (102).

4. Appareil de gestion de fonctionnement (100) selon la revendication 2 ou 3, dans lequel le schéma de destruction de corrélation est configuré pour indiquer si la destruction de corrélation de chacune des une ou plusieurs corrélations incluses dans le modèle de corrélation s'est produite ou non ; et
lorsqu'un remplacement d'un premier appareil surveillé inclus dans le système par un deuxième appareil surveillé ayant la même configuration que le premier appareil surveillé est détecté par le moyen de détection de changement de configuration (107), le moyen de mise à jour de schéma de destruction de corrélation (108) est configuré pour changer des informations indiquant si la destruction de corrélation de la corrélation concernant le premier appareil surveillé s'est produite ou non en informations indiquant si la destruction de corrélation de la corrélation concernant le deuxième appareil surveillé s'est produite ou non, dans le schéma de destruction de corrélation, et
lorsqu'un ajout du deuxième appareil surveillé ayant la même configuration que le premier appareil surveillé inclus dans le système est détecté par le moyen de détection de changement de configuration (107), le moyen de mise à jour de schéma de destruction de corrélation (108) est configuré pour générer des informations indiquant si la destruction de corrélation de la corrélation concernant le deuxième appareil surveillé s'est produite ou non d'après des informations indiquant si la destruction de corrélation de la corrélation concernant le premier appareil surveillé s'est produite ou non dans le schéma de destruction de corrélation, et est configuré pour ajouter les informations générées au schéma de destruction de corrélation.

5. Appareil de gestion de fonctionnement (100) selon la revendication 3, dans lequel le schéma de destruction de corrélation indique ou non la destruction de corrélation de chacune des une ou plusieurs corrélations incluses dans le modèle de corrélation ; et
lors d'un déplacement de la corrélation entre un premier appareil surveillé et un deuxième appareil surveillé à la corrélation entre le premier appareil surveillé et un troisième appareil surveillé inclus dans le système est détecté par le moyen de détection de changement de configuration (107), le moyen de mise à jour de schéma de destruction de corrélation (108) est configuré pour changer des informations indiquant si la destruction de corrélation de la corrélation entre le premier appareil surveillé et le deuxième appareil surveillé s'est produite ou non en informations indiquant si la destruction de corrélation de la corrélation entre le premier appareil surveillé et le troisième appareil surveillé s'est produite ou non, dans le schéma de destruction de corrélation ; et
lorsqu'un ajout de la corrélation entre le premier appareil surveillé et le deuxième appareil surveillé à la corrélation entre le premier appareil surveillé et le troisième appareil surveillé inclus dans le système est détecté par le moyen de détection de changement de configuration (107), le moyen de mise à jour de schéma de destruction de corrélation (108) est configuré pour générer des informations indiquant si la destruction de corrélation de la corrélation entre le premier appareil surveillé et le troisième appareil surveillé s'est produite ou non d'après des informations indiquant si la destruction de corrélation de la corrélation entre le premier appareil surveillé et le deuxième appareil surveillé s'est produite ou non dans le schéma de destruction de corrélation, et est configuré pour ajouter les informations générées au schéma de destruction de corrélation.

6. Procédé de gestion de fonctionnement comprenant :
la génération d'un modèle de corrélation comportant une ou plusieurs fonctions de corrélation indiquant chacune une corrélation entre deux métriques différentes parmi une pluralité de métriques d'un système, la métrique étant un indice de performance du système, la fonction de corrélation étant une fonction qui estime, à partir d'une valeur d'une métrique de deux métriques différentes, une valeur de l'autre métrique des deux métriques différentes ;
le fait de détecter si un changement de configuration du système s'est produit ou non ; dans lequel lorsqu'un changement de configuration est détecté (S105), la génération d'un modèle de corrélation d'après les informations de performance pendant une période de modélisation prédéterminée recueillies après la détection de changement de configuration (S107) ; et
l'identification d'une cause de défaillance du système à l'aide du modèle de corrélation qui est généré d'après des valeurs mesurées de la pluralité de métriques après le changement de configuration du système lorsque le changement de configuration du système est détecté, et l'établissement du modèle de corrélation généré en tant que modèle de corrélation à utiliser (S108), dans lequel la destruction d'une corrélation incluse dans le modèle de corrélation est définie en tant que destruction de corrélation,
dans lequel l'identification identifie la cause de défaillance du système en comparant un statut de destruction de corrélation détecté pour des valeurs nouvellement mesurées de la pluralité de métriques et un schéma de destruction de corrélation indiquant un statut de destruction de corrélation au moment d'une défaillance du système qui s'est produite par le passé,
dans lequel la destruction de corrélation est détectée si une différence entre une valeur estimée en fournissant en entrée une valeur nouvellement entrée d'une métrique dans la fonction de corrélation et une valeur nouvellement entrée de l'autre métrique est supérieure ou égale à une valeur prédéterminée,
dans lequel le schéma de destruction de corrélation est corrigé d'après le modèle de corrélation utilisé après le changement de configuration lorsque le changement de configuration du système est détecté, et
dans lequel la cause de défaillance du système est identifiée en utilisant le schéma de destruction de corrélation corrigé lorsque le changement de configuration du système est détecté.

7. Support de stockage lisible par ordinateur sur lequel est enregistré un programme, amenant un ordinateur à réaliser un procédé comprenant :
générer un modèle de corrélation comportant une ou plusieurs fonctions de corrélation indiquant chacune une corrélation entre deux métriques différentes parmi une pluralité de métriques d'un système, la métrique étant un indice de performance du système, la fonction de corrélation étant une fonction qui estime, à partir d'une valeur d'une métrique de deux métriques différentes, une valeur de l'autre métrique des deux métriques différentes ;
détecter si un changement de configuration du système s'est produit ou non ; dans lequel lorsqu'un changement de configuration est détecté (S105), la génération d'un modèle de corrélation d'après les informations de performance pendant une période de modélisation prédéterminée recueillies après la détection de changement de configuration (S107) ; et
identifier une cause de défaillance du système à l'aide du modèle de corrélation qui est généré d'après des valeurs mesurées de la pluralité de métriques après le changement de configuration du système lorsque le changement de configuration du système est détecté, et l'établissement du modèle de corrélation généré en tant que modèle de corrélation à utiliser (S108), dans lequel la destruction d'une corrélation incluse dans le modèle de corrélation est définie en tant que destruction de corrélation,
dans lequel l'identification identifie la cause de défaillance du système en comparant un statut de destruction de corrélation détecté pour des valeurs nouvellement mesurées de la pluralité de métriques et le schéma de destruction de corrélation indiquant un statut de destruction de corrélation au moment d'une défaillance du système qui s'est produite par le passé,
dans lequel la destruction de corrélation est détectée si une différence entre une valeur estimée en fournissant en entrée une valeur nouvellement entrée d'une métrique dans la fonction de corrélation et une valeur nouvellement entrée de l'autre métrique est supérieure ou égale à une valeur prédéterminée,
dans lequel le schéma de destruction de corrélation est corrigé d'après le modèle de corrélation utilisé après le changement de configuration lorsque le changement de configuration du système est détecté, et
dans lequel la cause de défaillance du système est identifiée en utilisant le schéma de destruction de corrélation corrigé lorsque le changement de configuration du système est détecté.
